# EUROPÄISCHE PATENTSCHRIFT

(11) **EP 2 098 464 B1**
(45) Veröffentlichungstag und Bekanntmachung des Hinweises auf die Patenterteilung: **25.05.2011**
(21) Anmeldenummer: 09154537.6
(22) Anmeldetag: 06.03.2009
(51) Int. Cl.: B65G 1/137

(54) **Kommissioniereinrichtung und Verfahren zum Kommissionieren**
Picking device and method
Dispositif de commissionnement et procédé de commissionnement

(30) Priorität: 06.03.2008 DE 102008012877
(43) Veröffentlichungstag der Anmeldung: 09.09.2009
(73) Patentinhaber: psb intralogistics GmbH, 66955 Pirmasens (DE)
(72) Erfinder: Dr. Linge, Niels, 66955, Pirmasens (DE); Lütz, Andreas, 66955, Pirmasens (DE); Schehl, Hans Gerhard, 66955, Pirmasens (DE); Welsch, Volker, 66955, Pirmasens (DE); Utzinger, Werner, 66955, Pirmasens (DE); Hickethier, Klaus, 66955, Pirmasens (DE); Müller, Martin, 66955, Pirmasens (DE)
(74) Vertreter: Viering, Jentschura & Partner

(56) Entgegenhaltungen:
- EP-A- 0 849 193
- EP-A- 1 443 002
- JP-A- 4 116 001

## Beschreibung

Die Erfindung betrifft eine Kommissioniereinrichtung und ein Verfahren zum Kommissionieren von Artikeln aus Quellbehältern in Zielbehälter.

Hierbei umfasst der Begriff "Behälter" jegliche Transport- und/oder Lagermittel, wie z.B. Kästen, Kartonschachteln, etc., und auch solche Mittel, die kein zur Aufnahme von Artikeln dienendes Hohlvolumen einschließen, wie Paletten, Kleiderständer etc. Als Artikel kommen jegliche Kommissionswaren, wie Textilien, Möbel(teile), Maschinenelemente wie Schrauben, Muttern, Federn etc. in Betracht.

In der Regel befinden sich die zu kommissionierenden Artikel in Quellbehältern, auch Lagerbehälter genannt, in einem Artikellager, insbesondere einem Regallager, an welches eine Quellbehälter-Fördereinrichtung, wie ein Regalbediengerät mit zugeordnetem Bahnförderer, angeschlossen ist, von der die Quellbehälter zu einem Kommissionierbereich transportiert werden, in welchem sich eine Kommissionierperson aufhält (d.h. der Kommissionierbereich stellt einen Steh- oder Sitz-Arbeitsplatz dar), von welcher die Artikel aus den Quellbehältern manuell in Zielbehälter, auch Auftragsbehälter genannt, kommissioniert werden (= manuelles Einbringen von Artikeln aus Quellbehältern in Zielbehälter nach einem bestimmten Kommissionierplan). Der Kommissionierbereich soll klein dimensioniert sein, damit die Kommissionierperson keine langen Wege zwischen den Quell- und Zielbehältern hat.

Für heutige Hochleistungskommissioniersysteme sind in der Regel pro Kommissionierperson 1000 oder mehr Zugriffe auf Artikel pro Stunde (so genannte "Picks" pro Stunde) gewünscht, d.h. die Kommissioniereinrichtung muss es einer jeweiligen Kommissionierperson (von einer Mehrzahl von Kommissionierpersonen) ermöglichen, 1000 oder mehr Artikel pro Stunde aus diversen Quellbehältern zu greifen und in diverse Zielbehälter zu kommissionieren. Bei dieser Menge wird oftmals die an das Artikellager angeschlossene Quellbehälter-Fördereinrichtung, insbesondere ein die Quell-Behälter aus einem Regal ziehendes und zurücksortierendes Regalbediengerät, überfordert.

Eine Entlastung für die Quellbehälter-Fördereinrichtung schafft zum Beispiel das Vorsehen eines Quellbehälter-Puffers. Dieser kann z.B., so wie in der EP 0 860 382 A1 beschrieben, in einem jeweiligen von einem abgezweigten Quellbehälterzuführkanal vorgesehen sein, wobei das Quellbehälterverteilersystem oftmals, wie auch in der EP 0 860 382 A1, als Kreisförderer ausgebildet ist und damit ebenfalls einen Puffer darstellt. Dadurch, dass sich Quellbehälter im Puffer befinden, kann auf diese Quellbehälter lokal (d.h. außerhalb und damit unabhängig vom eigentlichen Artikellager) zurückgegriffen werden, sodass die Quellbehälter-Fördereinrichtung im Artikellager entlastet ist.

Aus der DE 102 00 077 A1 ist ein Kommissioniersystem mit Entkopplungspuffer bekannt, wobei Quellbehälter mit zu kommissionierenden Artikeln über zwei Förderbänder von einem Lager einer Kommissionierperson zugeführt bzw. von dieser abgeführt werde, und wobei Zielbehälter in welche die Artikel kommissioniert werden in einem Pufferregal zwischengelagert und der Kommissionierperson jeweilig über ein Pufferregalbediengerät zugeführt werden.

Aus der DE 40 16 810 C1 ist ein Regallager für in selbsttragenden, langgestreckten Kassetten aufgenommenes stangenförmiges Material bekannt, wobei die Kassetten in quer zur Längserstreckung der Kassetten nebeneinander angeordneten Regalen angeordnet sind. Mittels eines quer zur Längserstreckung verfahrbaren Transportwagens können Kassetten aus den Regalen entnommen und zu einer Ein- bzw. Auslager - Station transportiert werden, an welcher eine Bedienperson Artikel zum Einlagern in Kassetten einlegen bzw. zum Auslagern aus Kassetten entnehmen kann. Die Station besteht aus einer oberen Förderbahn, welche von dem Transportwagen Kassette zum Zuführen an die Bedienperson erhält, und einer unteren Förderbahn, über welche Kassetten wieder zurück an den Transportwagen transportiert werden, um von diesem dann wieder zurück ins Regal gebracht zu werden.

EP 1 443 002 A1 offenbart eine Anlage zum Kommissionieren von Waren von Quellbehältern aus einem Hochregallager in Sammelbehälter. Hierbei befindet sich eine Kommissionierperson in einem in dem Regalgang zwischen den Hochregalen des Hochregallagers ausgebildeten Kommissionierbereich, wobei die Kommissionierperson direkt auf die in den Regalfächer von benachbarten Hochregalen gelagerten Quellbehälter zugreifen kann. Die Sammelbehälter werden mittels einer Fördertechnik, welche einen Abzweigförderpfad mit einem vertikalen Paternosterförderer aufweist, an dem Kommissionierbereich vorbeitransportiert, wobei die Paternosterebene senkrecht zu dem Regalgang verlaufen kann. Nach einer alternativen Ausführungsform hat der Abzweigförderpfad zwei Unter-Abzweigförderpfade, die sich benachbart und zueinander parallel erstrecken und auf denen Sammelbehälter am Kommissionierbereich vorbeitransportiert werden.

Durch die Erfindung wird eine Kommissioniereinrichtung sowie ein Verfahren zum Kommissionieren von Artikeln geschaffen, womit eine effiziente Kommissionierung mit 1000 und mehr Zugriffen pro Stunde pro Kommissionierperson ermöglicht wird, wobei eine auf ein Artikellager zugreifende Quellbehälter-Fördereinrichtung entlastet wird und wobei die erfindungsgemäße Kommissioniereinrichtung platz- und kosteneffizient ist.

Hierzu stellt die Erfindung eine Kommissioniereinrichtung gemäß dem Anspruch 1 sowie ein Verfahren zum Kommissionieren gemäß dem Anspruch 11 bereit. Vorteilhafte Weiterbildungen der Erfindung sind in den abhängigen Ansprüchen beschrieben.

Dadurch, dass gemäß der Erfindung stets mehrere Zielbehälter umlaufend wiederholt der im Kommissionierbereich befindlichen Kommissionierperson zugeführt werden, ist es möglich, zunächst die Artikel aus einem einzigen Quellbehälter in die mehreren Zielbehälter hinein zu kommissionieren, d.h. es muss eine Zeit lang nicht auf andere Quellbehälter zurückgegriffen werden, wodurch die im Artikellager auf die Quellbehälter zugreifende Fördertechnik entlastet wird; der Kommissionsvorgang ist dennoch sehr effizient (hohe Zugriffszahl (Pickzahl)), da im Rahmen des Umlaufs der Zielbehälter ständig kommissioniert werden kann. Erst wenn jeder der sich im Umlauf befindlichen Zielbehälter mit den Artikeln des einen Quellbehälters wunschgemäß kommissioniert ist, braucht ein neuer Quellbehälter an den Kommissionierbereich herangeführt werden. Hierbei ist es denkbar, alle sich im Umlauf befindlichen Zielbehälter mit den Artikeln aus den diversen Quellbehältern komplett zu kommissionieren. D.h., wenn alle Zielbehälter mit den Artikeln aus einem Quellbehälter kommissioniert sind, dann wird ein anderer Quellbehälter mit anderen Artikeln an die Kommissionierperson herangeführt, welche dann alle sich im Umlauf befindlichen Quellbehälter mit diesen anderen Artikeln des anderen Quellbehälters vollständig kommissioniert, usw., bis alle Zielbehälter letztlich komplett kommissioniert sind, d.h. gemäß Auftrag mit allen gewünschten Artikeln in den entsprechend gewünschten Anzahlen zur Endauslieferung des Zielbehälters kommissioniert sind.

Es ist aber auch denkbar, einen niedrigeren Kommissionierungsgrad für den jeweiligen in der Zielbehälter-Umlauffördervorrichtung sich im Umlauf befindlichen Zielbehälter vorzubestimmen; so kann beispielsweise der jeweilige Zielbehälter nur mit Artikeln eines einzigen bestimmten Typs aus einem oder mehreren diesem Artikeltyp zugeordneten Quellbehältern kommissioniert werden und dann mittels der Zielbehälter-Fördervorrichtung von der Zielbehälter-Umlauffördervorrichtung entnommen werden. Der jeweilige Zielbehälter kann dann z.B. von der Zielbehälter-Fördervorrichtung in die Zielbehälter-Umlauffördervorrichtung einer anderen, entsprechend aufgebauten Kommissioniereinrichtung eingesetzt werden, wo er dann von der dortigen Kommissionierperson mit einem anderen Artikel aus einem anderen Quellbehälter erfindungsgemäß weiter kommissioniert wird; diese Vorgehensweise kann bis zur letztlich kompletten Kommissionierung des jeweiligen Zielbehälters wiederholt werden.

Die Quellbehälter können Artikel eines Typs (= "sortenreine" Quellbehälter) oder aber auch mehrere Artikel unterschiedlichen Typs enthalten/tragen. So können z.B. Behälter Kleidungsstücke (=Artikel) unterschiedlicher Farbe (Typ) oder Kleidungsstücke (=Artikel) unterschiedlicher Art (Typ) wie Hose, Bluse, T-Shirt enthalten. Die Kommissionierperson erhält hierbei über eine Anzeige genaue Anweisung, welcher Artikel und/oder welcher Artikeltyp und/oder welche Menge dieses Artikeltyps in den jeweiligen Zielbehälter zu kommissionieren ist. Bevorzugt werden in die Zielbehälter eines Umlaufs jeweils gleiche Artikel des gleichen Typs und vorteilhaft in gleicher Anzahl kommissioniert.

Als Kommissionierbereich ist jener Bereich zu verstehen, in welchem sich die Kommissionierperson zum Kommissionieren der Artikel aus den Quellbehältern in die Zielbehälter aufhält; d.h. der Kommissionierbereich bildet den Arbeitsbereich/Arbeitsplatz der Kommissionierperson. Der Kommissionierbereich ist in der Regel als horizontale Fläche ausgebildet, auf welcher die Kommissionierperson steht oder mittels einer Sitzgelegenheit sitzt. In dem sich die Förderkreisebene (imaginär) durch den Kommissionierbereich hindurch erstreckt, befindet sich der Kommissionierbereich also stirnseitig am Förderkreis bzw. an der Förderschleife.

Die leeren Zielbehälter werden von einer Fördertechnik, welche erfindungsgemäß die Zielbehälter-Umlauffördervorrichtung und die Zielbehälter-Fördereinrichtung umfasst, dem Kommissionierbereich automatisch zugeführt und die kommissionierten Zielbehälter werden von der Fördertechnik wieder aus dem Kommissionierbereich automatisch abgeführt. Die Quellbehälter werden von einer Fördertechnik aus einem Artikellager automatisch herangefördert und der Kommissionierperson automatisch zugeführt. Ggf. noch mit Artikeln teilweise gefüllte Quellbehälter werden via die Fördertechnik automatisch vom Kommissionierbereich wieder ins Artikellager zurücktransportiert; leere Quellbehälter können automatisch vom Kommissionierbereich abgeführt und z.B. zwischen dem Lager und dem Kommissionierbereich automatisch entnommen und zur Leerquellbehälter-Sammelstelle transportiert werden. Es besteht auch die Möglichkeit, leere Quellbehälter direkt als Zielbehälter weiter zu verwenden.

Die Zielbehälter-Umlauffördervorrichtung kann als Paternostervorrichtung ausgebildet sein, in welcher die Behälter an einem z.B. via Elektromotor angetriebenen Umlaufstrang, insbesondere einer Umlaufkette hängen. Als Zielbehälter-Umlauffördervorrichtung bevorzugt ist ein Schiebemechanismus, mit zwei im Wesentlichen horizontalen, in einem Vertikalabstand übereinander liegenden im wesentlichen linearen Förderstrecken, von denen die eine ein Zuführtrumm und die andere ein Abführtrumm darstellt (bezüglich des Kommissionierbereichs zuführend bzw. abführend), wobei an den Enden der Linearförderstrecken jeweils eine Umsetzvorrichtung in Form einer Hubeinrichtung vorgesehen ist, um die Zielbehälter vom Abführtrumm auf das Zuführtrumm und/oder auch umgekehrt zu transportieren. Der Umlaufbetrieb kann in seiner Richtung umkehrbar sein; d.h. die obere Förderstrecke kann wahlweise Zuführtrumm und Abführtrumm sein; gleiches gilt damit auch für die untere Förderstrecke. Dies hat den Vorteil, dass in Abhängigkeit von der Entfernung eines sich im Zielbehälterförderkreis befindlichen Zielbehälters zum Kommissionierbereich, dieser Zielbehälter bei Anforderung (d.h. wenn gemäß einem Steuerprogramm vorgegeben wird, dass nunmehr wieder in diesen Zielbehälter zu kommissionieren ist) entweder in der einen oder in der anderen Umlaufrichtung zum Kommissionierbereich gefördert wird; hierbei wird dann in jener Umlaufrichtung gefördert, die der kürzesten Entfernung entspricht, wodurch die Förderzeit weiter erheblich verkürzt und damit die Effizienz der Kommissioniereinrichtung weiter erheblich gesteigert werden kann. In gleicher Weise kann auch mit den sich im Quellbehälter-Förderkreis befindenden Quellbehältern (vgl. Anspruch 2) verfahren werden.

Der Antrieb auf den im Wesentlichen horizontalen Förderstrecken kann via Elektromotorantrieb erfolgen; es ist auch ein jeweiliger Schwerkraftantrieb denkbar, wobei die Förderstrecken dann z.B. etwa 3-5° gegenüber der Horizontalen geneigt sind (solche kleineren Neigungen werden hier als immer noch im Wesentlichen horizontal verlaufend verstanden). Beide Förderstrecken können zu dem Kommissionsbereich hin abfallend leicht geneigt verlaufen, sodass die zur Behälterabfuhr genutzte Förderstrecke mit einem Zusatzantrieb zur Überwindung der Schwerkraft versehen sein muss. Es ist auch denkbar, die Zielbehälter auf der unteren Förderstrecke via Schwerkraft zuzuführen (z.B. via die um 3-5° geneigte Förderstrecke) und die Zielbehälter auf der oberen Förderstrecke manuell zurückzuschieben, wofür die obere Förderstrecke z.B. als ungeneigte horizontale Rollenbahn ausgebildet ist, bevorzugt ist jedoch ein automatischer Antrieb (inkl. Schwerkraftantrieb). An dem dem Kommissionierbereich zugewandten Stirnende der Förderstrecken kann die vertikale Überführung des Zielbehälters von der einen zu der anderen Förderstrecke manuell erfolgen, bevorzugt sind aber an beiden Stirnenden der Zielbehälter-Umlauffördervorrichtung elektromotorgetriebene Hubvorrichtungen zum Umsetzen der Zielbehälter von der einen auf die andere Förderstrecke, d.h. von dem einen auf das andere Trumm.

Die obere Förderstrecke liegt bevorzugt auf Arbeitshöhe (ca. 1100mm über dem Boden), so dass die Kommissionierperson auf jenen Zielbehälter von der Zielbehälter-Umlauffördervorrichtung zugriff hat, der an dem ihr zugewandten Ende der oberen Förderstrecke der Zielbehälter-Umlauffördervorrichtung positioniert ist. Bei einer Mehrzahl von Zielbehältern, wie z.B. sechs Zielbehältern, erstreckt sich die Zielbehälter-Umlauffördervorrichtung bevorzugt mit ihrer oberen Förderstrecke (z.B. Abführtrumm) und ihrer unteren Förderstrecke (z.B. Zuführtrumm) im Wesentlichen horizontal länglich, sodass die Zielbehälter im Wesentlichen horizontal zu der im Kommissionierbereich befindlichen Kommissionsperson hintransportiert und entsprechend wieder davon wegtransportiert werden.

Die Zielbehälter laufen daher in einem Zielbehälter-Förderkreis, d.h. einer Zielbehälter-Förderschleife, um, die eine Förderkreisebene definiert, die erfindungsgemäß durch den Kommissionierbereich verläuft. (D.h. die imaginäre Ebene, nicht aber der Förderkreis mit den Zielbehältern als Struktur erstreckt sich durch den Förderbereich). Dies hat den Vorteil, dass die Zielbehälter-Umlauffördervorrichtung von der stirnseitig am zugehörigen Förderkreis, d.h. stirnseitig an der zugehörigen Förderschleife, positionierten Kommissionierperson aus gesehen sehr schmal, d.h. mit sehr geringer Breite bauen kann. Die Breite der Zielbehälter-Umlauffördervorrichtung wird hierbei bevorzugt an die Breite der Zielbehälter angepasst. So können z.B. 400-500 mm breite Zielbehälter mit einer in etwa entsprechend breiten Zielbehälter-Umlauffördervorrichtung transportiert werden.

Dies erlaubt es nunmehr, dass problemlos mehrere Zielbehälter-Umlauffördervorrichtung mit zueinander parallelen Förderkreisebenen nebeneinander in Reihe angeordnet werden, welche von derselben Kommissionierperson bedient werden können, da der Kommissionierbereich insgesamt sehr klein bleibt. Die Breite des Kommissionierbereichs entspricht der Gesamtbreite der nebeneinander angeordneten Zielbehälter-Umlauffördervorrichtungen.

Es ist hierbei durchaus denkbar, vier bis sechs oder auch mehr Zielbehälter-Umlauffördervorrichtungen parallel nebeneinander aneinandergereiht anzuordnen, die von einer Kommissionierperson bedient werden.

Die Zielbehälter können z.B. mittels eines Greifers (=Fördertechnik) von einem Leer-Zielbehälter-Lager direkt in die jeweilige Zielbehälter-Umlauffördervorrichtung eingesetzt und von dieser wieder entnommen und in ein Fertig-Zielbehälter-Lager oder in eine nächste, z.B. benachbarte Zielbehälter-Umlauffördervorrichtung, gesetzt werden. Nach einer Variante hat die Zielbehälter-Fördereinrichtung eine Zielbehälter-Zuführtransportbahn, von welcher die Zielbehälter zu der jeweiligen Zielbehälter-Umlauffördervorrichtung transportiert werden, um dort bei Bedarf mittels einer Überführungsvorrichtung an die jeweilige Zielbehälter-Umlauffördervorrichtung überführt zu werden. Ferner kann die Zielbehälter-Fördereinrichtung eine Zielbehälter-Abführtransportbahn umfassen, auf welche kommissionierte Zielbehälter mittels einer Überführungsvorrichtung von der Zielbehälter-Umlauffördervorrichtung überführt werden. Die Zielbehälter-Zuführtransportbahn und die Zielbehälter-Abführtransportbahn können auch als eine einzige Transportbahn ausgebildet sein. Eine Sensoreinrichtung, z.B. eine Strichcode- oder RFID-Tag-Leseeinrichtung, erkennt dann, ob, wann, wo und wie ein Ziel-Behälter zuzuführen/abzuführen ist, um dann Weiterleitsysteme/Überführsysteme zur Durchführung der notwendigen Überführungsvorgänge entsprechend anzusteuern. Die Quellbehälter können z.B. mittels einer quer über die Zielbehälter-Umlauffördervorrichtung(en), d.h. quer zu der jeweiligen Förderkreisebene und damit parallel zum Kommissionierbereich, verlaufende Transportbahn von der Seite her zum jeweiligen Kommissionierbereich herangeführt und davon wieder abgeführt werden, wobei nach einer Variante die Quellbehälter in der Position gegenüber dem jeweiligen Kommissionierbereich über einen Schrägstellmechanismus in Richtung zum Kommissionierbereich automatisch leicht gekippt werden, sodass die Kommissionsperson leichter auf die Artikel im jeweiligen Quellbehälter zugreifen kann.

Nach der Ausführungsform gemäß Anspruch 2 werden die Quellbehälter mittels einer Quellbehälter-Umlauffördervorrichtung an die Kommissionierperson herangeführt; die den Quellbehältern zugeordnete Fördertechnik umfasst damit eine Quellbehälter-Fördereinrichtung zum Hin- und Hertransportieren von Quellbehältern zwischen dem Artikellager und der Quellbehälter-Umlauffördervorrichtung sowie die Quellbehälter-Umlauffördervorrichtung zum abschließenden Zuführen der Quellbehälter an den Kommissionierbereich und damit an die Kommissionierperson. Die Quellbehälter-Umlauffördervorrichtung ist bevorzugt entsprechend der oben beschriebenen Zielbehälter-Umlauffördervorrichtung ausgebildet. Letzteres bedeutet, dass die Quellbehälter identisch zu den Zielbehältern sind und dass die Quellbehälter-Umlauffördervorrichtung entsprechend der Zielbehälter-Umlauffördervorrichtung strukturiert und bemessen ist. Dies erlaubt eine platz- und kosteneffiziente Modul- bzw. Baukastenbauweise, in der die Behälter-Umlauffördervorrichtungen wahlweise sowohl als Zielbehälterals auch als Quellbehälter-Umlaufvorrichtungen einsetzbar sind, wobei Zielbehälter per se auch als Quellbehälter und umgekehrt verwendbar sind. Indem damit jegliche Behälter-Zuführvorrichtungen als zueinander identische Module ausgebildet sind, können unterschiedlich dimensionierte Kommissioniereinrichtungen extrem kosteneffizient bereitgestellt werden. Es können eine oder zwei Quellbehälter-Umlauffördervorrichtungen zentral angeordnet und jeweils eine oder zwei Zielbehälter-Umlauffördervorrichtungen horizontal außen auf beiden Seiten (in der Horizontalen) der zentralen Quellbehälter-Umlauffördervorrichtung(en) angeordnet sein; es können aber auch abwechselnd Quellbehälter-Umlauffördervorrichtungen und Zielbehälter-Umlauffördervorrichtungen vorgesehen sein. Die Heranführung von Quellbehältern an.die jeweilige Quellbehälter-Umlauffördervorrichtung erfolgt über die Quellbehälter-Fördereinrichtung, die entsprechend der Zielbehälter-Fördereinrichtung ausgebildet sein kann, d.h. zum Beispiel als Greifer und/oder als Transportbahneinrichtung mit einem oder mehreren Transportbändern ausgebildet sein kann. Die Zuführ-/Abführ-Transportbahnen der Zielbehälter-Fördereinrichtung(en) können auch gleichzeitig als Zuführ-/Abführ-Transportbahnen der Quellbehälter-Transporteinrichtung dienen. Die Quellbehälter-Fördereinrichtung weist zudem ein oder mehrere Lagerzugriffsgeräte, z.B. ein Lagerbediengerät/Lagerbedienfahrzeug auf, um auf die im Artikellager gelagerten Quellbehälter zuzugreifen und um letztere dann den weiteren Transporteinrichtungen der Fördertechnik zum Zuführen an die Quellbehälter-Umlauffördereinrichtung zuzuführen.

Die jeweiligen als Module ausgebildeten Zielbehälter-Umlauffördervorrichtungen und/oder Quellbehälter-Umlauffördervorrichtungen sind bevorzugt schubladenartig aneinander geführt angebracht, z.B. über ineinandergreifende Führungsschienen/Längsnuten mit Gleit- oder Rollenlagerung. Die Führungsachse verläuft z.B. im Wesentlich horizontal parallel zu den oberen und den unteren Förderstrecken. Es sind aber auch Steckverbindungen denkbar, wobei die jeweiligen Module in Richtung senkrecht zu den Förderkreisebenen aneinander steckend oder rastend befestigt werden. Das Schubladensystem hat hierbei den Vorteil, dass mittig angeordnete Module einfach via Herausziehen aus dem und wieder Einschieben in den Modulverbund auswechselbar sind.

Die jeweilige Zielbehälter-Umlauffördervorrichtung kann im Wesentlichen horizontale Förderstrecken z.B. zwei Rollenbahnen oder zwei rollengestützte Transportbänder mit frei drehenden und/oder motorgetriebenen Rollen aufweisen, auf welche die Zielbehälter direkt aufgesetzt werden. Die Hubvorrichtungen können Greifarme sein, die die Zielbehälter am Stirnende des Förderkreises greifen und frei umsetzen; die Hubvorrichtungen können auch Hubplattformen sein, welche jeweils in Flucht zu der der jeweiligen Förderstrecke bringbar sind, sodass die Förderstrecke die Behälter direkt auf die Plattform fördert. Es können auch Tragmittel fest in den Förderkreis integriert sein, wie z.B. Tragplatten, auf welche die Zielbehälter aufsetzbar sind. Die Tragplatten werden stets umlaufend transportiert, z.B. über Rollenbahnen in der im Wesentlichen Horizontalen, wobei sie am Ende des jeweiligen Trumms, d.h. der jeweiligen im Wesentlichen horizontalen Förderstrecke, dann auf eine Hubvorrichtung rollen oder geschoben werden, um zu der darunter oder darüber liegenden Förderstrecke gehoben/gesenkt zu werden, wo sie dann wieder von der Hubvorrichtung auf diese Förderstrecke geschoben werden.

Die Erfindung wird im Folgenden anhand von Ausführungsbeispielen mit Bezugnahme auf die beigefügte Zeichnung weiter erläutert. In der Zeichnung zeigen:
Figur 1 eine perspektivische Schemadarstellung einer Kommissioniereinrichtung gemäß einer Ausführungsform der Erfindung,
Figuren 2 und 3 eine schematische Draufsicht bzw. eine schematische Seitenansicht einer Kommissioniereinrichtung gemäß einer Ausführungsform der Erfindung,
Figur 4 eine schematische Seitenansicht eines Moduls einer Kommissioniereinrichtung gemäß einer Ausführungsform der Erfindung,
Figur 5 eine schematisch Seitenansicht eines Moduls einer Kommissioniereinrichtung gemäß einer Ausführungsform der Erfindung,
Figur 6 eine schematische Seitenansicht eines Moduls einer Kommissioniereinrichtung gemäß einer Ausführungsform der Erfindung,
Figur 7 eine perspektivische Schemaansicht einer Ausführungsform einer Kommissioniereinrichtung gemäß der Erfindung
Figur 8 eine schematische Ansicht eines Bedienpaneels der Kommissioniereinrichtung gemäß der Erfindung und
Figuren 9 bis 12 schematische Draufsichten von weiteren Ausführungsformen der Erfindung.

In den Figuren sind für gleiche Elemente gleiche Bezugszeichen verwendet.

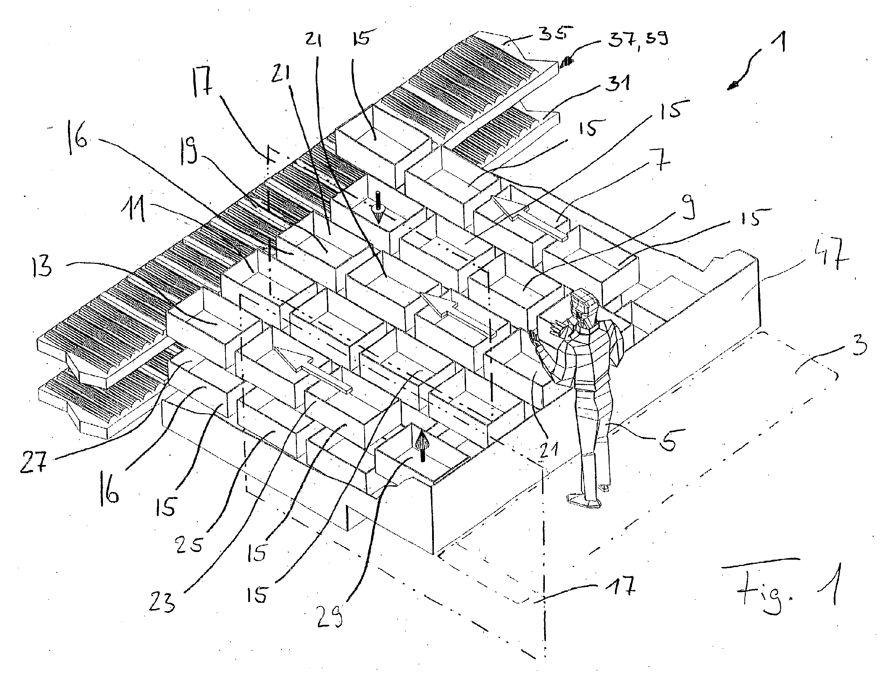

In Figur 1 ist eine erfindungsgemäße Kommissioniereinrichtung 1 dargestellt, mit einem als horizontale längliche Standfläche ausgebildeten Kommissionierbereich 3, in welchem sich eine Kommissionierperson 5 befindet, und mit vier parallel zueinander angeordneten Zielbehälter-Umlauffördervorrichtungen 7, 9, 11, 13, welche mit ihrer Stirnseite an den Kommissionierbereich 3 angrenzen und in denen jeweils sieben kastenförmige Zielbehälter 15 in einem Förderkreis, d.h. einer Förderschleife, 16 vertikal umlaufend vorgesehen sind. Der jeweilige Förderkreis verläuft in einer jeweiligen vertikalen Förderkreisebene 17. Zentral zwischen den Zielbehälter-Umlauffördervorrichtungen 7, 9, 11, 13 ist eine Quellbehälter-Umlauffördervorrichtung 19 angeordnet, in der sieben kastenförmige Quellbehälter 21 in einem Förderkreis 16 in einer vertikalen Förderkreisebene 17 vertikal umlaufen. Die vertikalen Förderkreisebenen 16 der Zielbehälter-Umlauffördervorrichtungen 7, 9, 11, 13 und der Quellbehälter-Umlaufvorrichtung 19 verlaufen parallel zueinander.

Die jeweiligen Zielbehälter-Umlauffördervorrichtungen 7, 9, 11, 13 und die Quellbehälter-Umlauffördervorrichtung 19 sind jeweils zueinander baugleich, mit identischen Behältern 15, 21, sodass die Quellbehälter 21 auch als Zielbehälter 15 verwendbar sind und umgekehrt; ferner kann auch jede der Zielbehälter-Umlauffördervorrichtungen 7, 9, 11, 13 als eine Quellbehälter-Umlauffördervorrichtung verwendet werden, und die Quellbehälter-Umlauffördervorrichtung 19 kann als eine Zielbehälter-Umlauffördervorrichtung verwendet werden.

Der Kommissionierbereich 3 erstreckt sich stirnseitig unmittelbar benachbart vor den Behälter-Umlauffördervorrichtungen 7, 9, 11, 13 und 19 mit einer der Gesamtbreite der Behälter-Umlauffördervorrichtungen 7, 9, 11, 13, 19 entsprechenden Länge. Die jeweilige Förderkreisebene 17 schneidet den Kommissionierbereich 3, sodass der Kommissionierbereich 3 und die sich darin befindende Kommissionierperson 5 am Stirnende des jeweiligen Förderkreises 16 positioniert sind, wo sich auch die eine Umlenkstelle jeder der Behälter-Umlauffördervorrichtungen 7, 9, 11, 13, 19 befindet. Der jeweilige Zielbehälter 15 und der jeweilige Quellbehälter 21 haben z.B. die Abmessungen von 600mm x 400mm x 220mm (Länge x Breite x Höhe); die Breite der jeweiligen Behälter-Umlauffördervorrichtung 7, 9, 11, 13, 19 liegt hier z.B. bei 500 mm, so dass die Gesamtbreite der Behälter-Umlauffördervorrichtungen 7, 9, 11, 3, 19 und damit die Länge des Kommissionsbereichs 3 hier ca. 2500 mm beträgt.

Indem die Behälter-Umlauffördervorrichtungen 7, 9, 11, 13, 19 baugleich sind, bilden sie leicht gegeneinander austauschbare Module; es können auch einfach weitere dieser Module hinzugefügt oder entfernt werden. Die Module sind baukastenartig aneinander gefügt, bevorzugt über Längsführungen die im Wesentlichen horizontal und parallel zu der Hinförder- und der Abförderrichtung (siehe unten) der Behälter-Umlauffördervorrichtungen 7, 9, 11, 13, 19 verlaufen.

Im Folgenden wird stellvertretend für alle Module nur die Zielbehälter-Umlauffördervorrichtung 13 in Figur 1 ganz links weiter im Detail beschrieben.

Die Zielbehälter-Umlauffördervorrichtung 13 hat eine obere im Wesentlichen horizontal und im Wesentlichen linear verlaufende Förderstrecke 23, welche als Abführtrumm ausgebildet ist, auf welchem Zielbehälter 15 vom Kommissionsbereich 3 weggeführt werden; die obere Förderstrecke 23 verläuft auf einer solchen Höhe, dass die darauf geförderten Zielbehälter 15 in einer Arbeitshöhe von ca. 1100 mm liegen. Jener Zielbehälter 15 auf der oberen Förderstrecke 23, der dem Kommissionierbereich 3 am nächsten gelegen ist, ist der momentan von der Kommissionierperson 5 zu kommissionierende Zielbehälter 15. Die Zielbehälter-Umlauffördervorrichtung 13 hat ferner eine untere im Wesentlichen horizontal und im Wesentlichen linear verlaufende Förderstrecke 25, welche als Zuführtrumm ausgebildet ist, auf welchem die Zielbehälter 15 vertikal unter dem Abführtrumm zum Kommissionsbereich 3 hin gefördert werden.

Damit werden die Zielbehälter 15 (und entsprechend die Quellbehälter 21) in der unteren Förderstrecke im Wesentlichen horizontal auf den Kommissionsbereich 3 bzw. die Kommissionsperson 5 zu gefördert und in der oberen Förderstrecke im Wesentlichen horizontal vom Kommissionsbereich 3 bzw. von der Kommissionsperson 5 weg gefördert. Es kann alternativ auch auf der oberen Förderstrecke 23 zum Kommissionsbereich 3 hingefördert und auf der unteren Förderstrecke 25 vom Kommissionsbereich 3 weggefördert werden; es kann auch ein Umkehrbetrieb erfolgen.

Eine erste, vom Kommissionierbereich 3 abgewandte Umkehrstelle 27 im Förderkreis der Zielbehälter-Umlauffördervorrichtung 13 ist mit einer nicht dargestellten Hubvorrichtung ausgestattet, von welcher Zielbehälter 15 zur Aufrechterhaltung des Umlaufbetriebs von der oberen Förderstrecke 23 (Abführtrumm) auf die untere Förderstrecke 25 (Zuführtrumm) automatisch, insbesondere elektromotorgetrieben, umsetzbar sind. Die zweite, dem Kommissionierbereich 3 zugewandte Umkehrstelle 29 im Förderkreis der Zielbehälter-Umlauffördervorrichtung 13 ist ebenfalls mit einer nicht dargestellten Hubvorrichtung ausgestattet, bevorzugt baugleich mit der erstgenannten Hubvorrichtung, um die Zielbehälter 15 zur Aufrechterhaltung des Umlaufbetriebs von der unteren Förderstrecke 25 (Zuführtrumm) auf die obere Förderstrecke 25 (Abführtrumm) automatisch, insbesondere elektromotorgetrieben, umzusetzen. Prinzipiell könnte am der Kommissionierperson zugewandten Stirnende die Hubvorrichtung auch wegfallen und der Behälter manuell vom Zuführtrumm auf das Abführtrumm umgesetzt werden; dies ist jedoch wegen mangelnder Effizienz nicht bevorzugt. Die Zielbehälter 15 können auf der oberen und auf der unteren Förderstrecke 23, 25 jeweils elektromotorgetrieben sein; der gesamte Umlauf-Förderbetrieb kann auch in der Richtung umkehrbar sein.

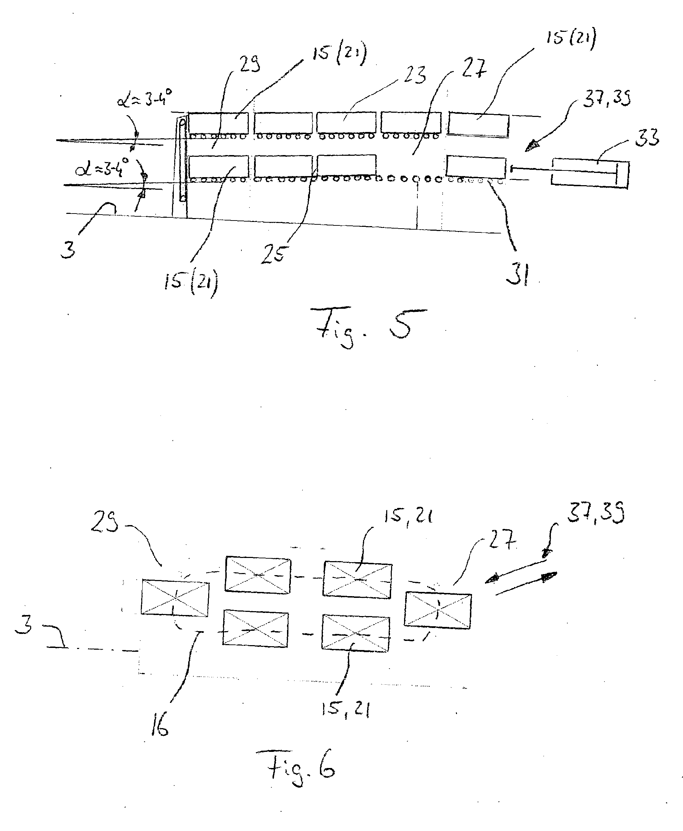

Figur 5 zeigt eine Ausführungsform einer Zielbehälter-(oder Quellbehälter-)Umlauffördervorrichtung 13 (19), bei der die untere und die obere Umlaufstrecke 23, 25 zwischen der ersten und der zweiten Umkehrstelle 27, 29 in einem bestimmten Winkel, z.B. von 3°-4° oder 5°, zum Kommissionierbereich 3 hin geneigt verlaufen; (dies wird hier als immer noch im Wesentlichen horizontal verlaufend angesehen). Die Neigung führt dazu, dass in der unteren Umlaufstrecke 25 ein Schwerkraftantrieb in Richtung Kommissionierbereich 3 vorliegt, sodass ein Motorantrieb entfallen kann. In der oberen Umlaufstrecke 23 muss dagegen ein die Schwerkraft überwindender Antrieb vorliegen, um die Zielbehälter 15 (oder Quellbehälter 21) vom Kommissionsbereich 3 abzuführen; dieser Antrieb kann durch Muskelkraft erfolgen, d.h. die Kommissionierperson schiebt die aneinandergrenzenden Zielbehälter 15 entlang z.B. der als eine Rollentransportbahn ausgebildeten oberen Förderstrecke 23 zurück. Bevorzugt ist die obere Förderstrecke 23 jedoch mit einem Motorantrieb, insbesondere einem Elektromotorantrieb, ausgestattet, um die Zielbehälter 15 vom Kommissionsbereich 3 abzuführen. Denkbar ist auch, die obere Förderstrecke 23 in einem bestimmten Winkel, z.B. von 3°-4° oder 5°, vom Kommissionsbereich 3 weggeneigt vorzusehen, sodass die Zielbehälter 15 auch schwerkraftgetrieben wieder vom Kommissionsbereich 3 abgeführt werden.

Die Zuführung von leeren oder teilweise kommissionierten Zielbehältern 15 an die jeweilige Zielbehälter-Umlauffördervorrichtung 7, 9, 11, 13 erfolgt gemäß den Ausführungsformen von Fig. 1 und Figur 5 über eine untere Rollentransportbahn 31, die auf Höhe der unteren Förderstrecke 25 der jeweiligen Zielbehälter-Umlauffördervorrichtung 7, 9, 11, 13 sowie benachbart zu deren vom Kommissionsbereich 3 entfernten Umlenkstelle 27 an deren Stirnseite verläuft. Damit kann z.B. über eine Schiebeeinrichtung 33, wie z.B. einen druckbetätigten, z.B. hydraulischen oder pneumatischen, Schiebezylinder, ein Zielbehälter 15 von der unteren Rollentransportbahn 31 unmittelbar auf die Zielbehälter-Umlauffördervorrichtüng 7, 9, 11, 13 überführt, d.h. auf deren untere Förderstrecke 23 geschoben, werden. Die Abführung von komplett oder teilweise kommissionierten Zielbehältern 15 von der jeweiligen Zielbehälter-Umlauffördervorrichtung 7, 9, 11, 13 erfolgt mittels einer oberen Rollentransportbahn 35, die parallel zu der unteren Rollentransportbahn 31 in einem Vertikalabstand dazu verläuft. Die Umsetzung des jeweiligen Zielbehälters 15 von der oberen Förderstrecke 25 auf die obere Rollentransportbahn 35 erfolgt z.B. einfach durch den Antrieb der oberen Förderstrecke 25; hierbei kann bei einem Schwerkraftantrieb ein mechanischer Stopper vorgesehen sein, der verhindert, dass der Zielbehälter 15 ungewollt vom Zielbehälter-Förderkreis 16 auf die obere Rollentransportbahn 35 gelangt. Nach den Ausführungsformen von Figuren 1 und 5 bilden die obere und die untere Transportbahn 31 und 35 eine Zielbehälter-Zuführfördereinrichtung 37 zum Zuführen und Abführen von Zielbehältern 15 an die jeweilige/von der jeweiligen Zielbehälter-Umlauffördervorrichtung 7, 9, 11, 13; die Zielbehälter-Zuführfördereinrichtung 37, d.h. deren Transportbahnen 31, 35, erstrecken sich quer zu den Förderkreisebenen 17.

Es ist denkbar, pro Zielbehälter-Umlauffördervorrichtung 7, 9, 11, 13 den jeweiligen Zielbehälter 15 nur mit einem bestimmten Artikel zu kommissionieren und den Zielbehälter 15 dann durch Umkehrbetrieb der Zielbehälter-Umlauffördervorrichtung 7, 9, 11, 13 wieder auf die untere Rollentransportbahn 31 zurückzufördern, um ihn dann von dort aus zum Weiterkommissionieren auf eine andere Zielbehälter-Umlauffördervorrichtung 7, 9, 11, 13 zu überführen. Ein wie vorstehend teilweise kommissionierter und auf die obere Rollentransportbahn 35 geförderter Zielbehälter 15 kann auch z.B. über eine wie oben beschrieben Schiebeeinrichtung von der oberen Rollentransportbahn 35 auf die obere Förderstrecke einer anderen der Zielbehälter-Umlauffördervorrichtungen 7, 9, 11, 13 überführt werden, welche hierzu temporär im Umkehrbetrieb läuft, wo er weiter kommissioniert wird.

Die Zielbehälter-Fördereinrichtung 37 der Kommissioniereinrichtung 1 gemäß den Ausführungsformen von Figuren 1 und 5 kann gleichzeitig auch als Quellbehälter-Fördereinrichtung 39 zum entsprechenden Zuführen und Abführen von Quellbehältern 21 an die zentral angeordnete Quellbehälter-Umlauffördervorrichtung 19 herangezogen werden. Quellbehälter 21 werden von einem nicht dargestellten Artikellager, z.B. einem Regallager, mittels eines nicht dargestellten Artikellagerbediengeräts auf die Quellbehälter-Fördereinrichtung 39 transportiert, um von letzterer zur jeweiligen Quellbehälter-Umlauffördereinrichtung 19 transportiert und von dort in die Quellbehälter-Umlauffördervorrichtung 19, d.h. in deren Förderkreis 16, eingesetzt zu werden, um letztlich von der Quellbehälter-Umlauffördervorrichtung 19 der Kommissionierperson 5 im Kommissionierbereich 3 umlaufend wiederholt zugeführt zu werden.

Anstelle von Transportrollenbahnen 31, 35 kommen jegliche andere Transporteinrichtungen für die Zielbehälter-Fördereinrichtung 37 und die Quellbehälter-Fördereinrichtung 39 in Frage. Die Rollenbahnen 31, 35 können durch Bänder ersetzt sein. Der jeweiligen Kommissioniereinrichtung 1 kann auch direkt ein Artikellagerbediengerät zugeordnet sein, welches direkt, ohne Zwischentransportbahn, jeweilige Quellbehälter vom Lager greift und in die Quellbehälter-Umlauffördervorrichtung 19 setzt und wieder aus dieser entnimmt. Gleiches kann für die Zielbehälter-Umlauffördervorrichtung 7, 9, 11, 13 bezüglich eines Leer-Zielbehälter-Lagers und eines Lagers für fertig kommissionierte Zielbehälter vorgesehen sein.

Der Betrieb der Kommissionseinrichtung 1 kann z.B. wie folgt sein: mittels der Zielbehälter-Fördereinrichtung 37 werden der jeweiligen Zielbehälter-Umlauffördervorrichtung 7, 9, 11, 13 solange Zielbehälter 15 zugeführt, bis die jeweilige Zielbehälter-Umlauffördervorrichtung 7, 9, 11, 13 jeweils komplett mit sieben zunächst leeren Zielbehältern 15 bestückt ist. Es ist nicht notwendig, die Zielbehälter-Fördereinrichtung 37 komplett zu füllen. Mit der Kommissionierung kann auch bereits begonnen werden, wenn der erste Behälter "Vorne, Oben" steht; d.h. dem Kommissionierbereich 3 zugewandt und der Kommissionierperson zugänglich. Gleichzeitig fördert die Quellbehälter-Fördereinrichtung 39 Quellbehälter 21 aus einem Artikellager zu der Quellbehälter-Umlauffördervorrichtung 19. Hierbei kann z.B. über eine Sensoreinrichtung erfasst sein, wie viele Artikel in einem jeweiligen Quellbehälter zur Verfügung stehen, sollte die Zahl an zur Verfügung stehenden Artikeln kleiner sein, als die in der jeweiligen Zielbehälter-Umlauffördervorrichtung, in welcher dieser Quellbehälter eingesetzt wird, benötigten Anzahl dieser Artikel, dann können z.B. gleich nacheinander mehrere Quellbehälter dieses Artikeltyps in die jeweilige Quellbehälter-Umlauffördervorrichtung 19 eingebracht werden.

Die Kommissionierperson 3 kommissioniert dann nach einem gewünschten Kommissionierplan, welcher ihr von einer Anzeige angezeigt wird, Artikel von den in den Quellbehälter-Umlaufvorrichtung 19 umlaufenden Quellbehältern 21 in die Zielbehälter 15, die in den vier Zielbehälter-Umlauffördervorrichtungen 7, 9, 11, 13 umlaufen. Die Anzeige zeigt z.B. an der Quellbehälter-Umlauffördervorrichtung die Anzahl und den Typ der insgesamt aus dem momentan der Kommissionierperson 5 zur Verfügung gestellten Quellbehälter 21 zu entnehmenden Artikel an. (Typanzeige entfällt, wenn nur ein Artikeltyp im Quellbehälter vorliegt.) Die Anzeige zeigt ferner z.B. an der jeweiligen Zielbehälter-Umlauffördervorrichtung die Anzahl der in den dort gerade der Kommissionierperson 5 zur Verfügung gestellten Zielbehälter 15 einzubringenden Artikel an.

Bevorzugt werden alle (hier sieben) Zielbehälter 15 der jeweiligen Zielbehälter-Umlauffördervorrichtung 7, 9, 11, 13 mit dem einen oder den Artikeln aus einem Quellbehälter 21 (oder bei nicht ausreichendem Vorrat aus einem weiteren Quellbehälter mit Artikel gleichen Typs) bestückt, worauf anschließend der nächste Quellbehälter 21 mit Artikeln eines anderen Typs herangeführt wird. Bevorzugt werden auf diese Weise alle Zielbehälter 15 in jeder Zielbehälter-Umlauffördervorrichtung 7, 9, 11, 13 komplett kommissioniert, d.h. mit allen gewünschten Artikeln aus diversen Quellbehältern 21 in der entsprechenden Anzahl bestückt, und dann an die Zielbehälter-Fördereinrichtung 37 überführt, um von dieser zur Endabfertigung der Zielbehälter 15 weitertransportiert zu werden.

Alternativ, können die Zielbehälter 15 in der jeweiligen Zielbehälter-Umlauffördervorrichtung 7, 9, 11, 13 auch nur mit Artikeln eines einzigen Typs oder einer Anzahl kleiner als die letztlich erwünschte Anzahl an Artikeltypen kommissioniert werden; die jeweiligen Zielbehälter 15 werden dann an eine nächste der Zielbehälter-Umlauffördervorrichtungen 7, 9, 11, 13 oder auch an eine nächste Kommissioniereinrichtung 1 gemäß dieser Erfindung überführt, um dort weiter kommissioniert zu werden, wobei diese Vorgehensweise bis Erhalt des komplett kommissionierten Zielbehälters 15 wiederholt wird.

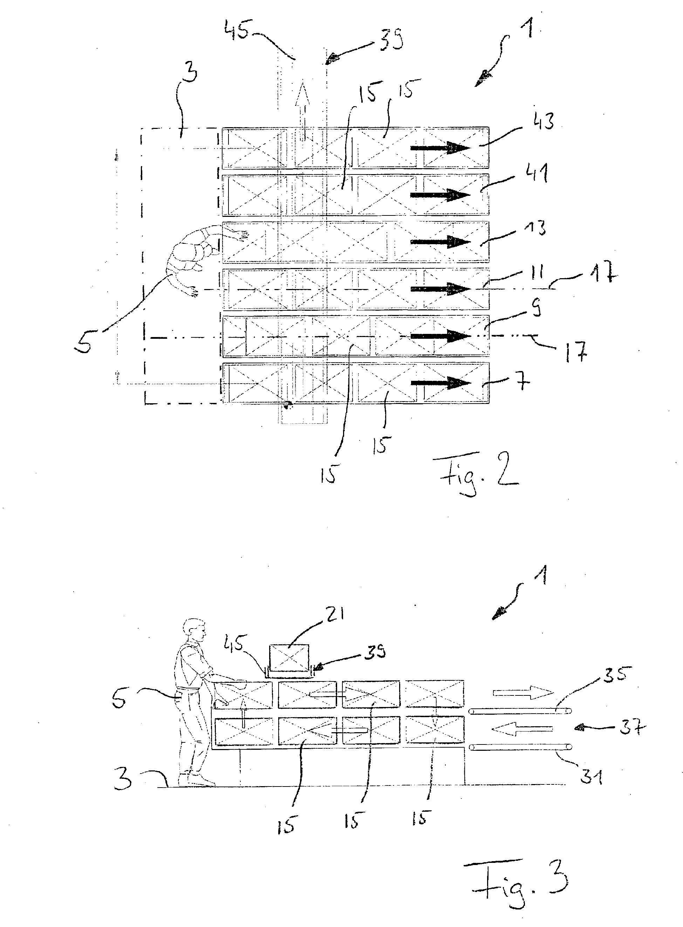

Die Figuren 2 und 3 zeigen eine Variante einer Kommissioniereinrichtung 1 gemäß der Erfindung. Bei dieser Variante sind sechs Zielbehälter-Umlauffördereinrichtungen 7, 9, 11, 13, 41, 43 modulartig parallel aneinandergereiht und grenzen stirnseitig an einen Kommissionierbereich 3 an, in welchem sich eine Kommissionierperson 3 befindet. Die Förderkreisebenen 17 verlaufen damit vertikal und parallel zueinander und schneiden den Kommissionierbereich 3. Die Zielbehälter-Umlauffördervorrichtungen 7, 9, 11, 13, 41, 43 sind im Wesentlichen entsprechend denen gemäß Figuren 1 und 5 aufgebaut, so dass eine Detailbeschreibung weggelassen wird; ein Unterschied besteht darin, dass nunmehr acht Zielbehälter 15 in der jeweiligen Zielbehälter-Umlauffördervorrichtung 9, 11, 13, 41, 43 umlaufen können. An dem vom Kommissionierbereich 3 abgewandten Stirnende der Zielbehälter-Umlauffördereinrichtungen 7, 9, 11, 13, 41, 43 ist wiederum eine Zielbehälter-Fördereinrichtung 37 mit einer oberen und einer unteren Förderbahn 35, 31 zum Abführen bzw. Zuführen von Zielbehältern 15 an die jeweiligen Zielbehälter-Umlauffördervorrichtung 7, 9, 11, 13, 41, 43 angeordnet.

Ferner im Gegensatz zur Ausführungsform von Figuren 1 und 5 weist bei der Ausführungsform nach den Figuren 2 und 3 die Quellbehälter-Fördereinrichtung 39 eine sich quer über die Zielbehälter-Umlauffördervorrichtungen 7, 9, 11, 13, 41, 43 erstreckende und damit sich quer zu den Förderkreisebenen 17 der Förderkreise 16 der Zielbehälter-Umlauffördervorrichtungen 7, 9, 11, 13, 41, 43 erstreckende Quellbehälterförderbahn 45 auf, von welcher Quellbehälter 21 direkt benachbart zu dem Kommissionierbereich 3 gefördert werden, sodass die Kommissionierperson die Artikel direkt aus den auf der Quellbehälterförderbahn 45 stehenden Quellbehältern 21 entnehmen kann. Die Quellbehälterförderbahn 45 ihrerseits kann als Kreisförderer ausgebildet sein und kann sich über sämtliche einer Mehrzahl von Kommissioniereinrichtungen 1 in der wie oben beschriebenen Art erstrecken.

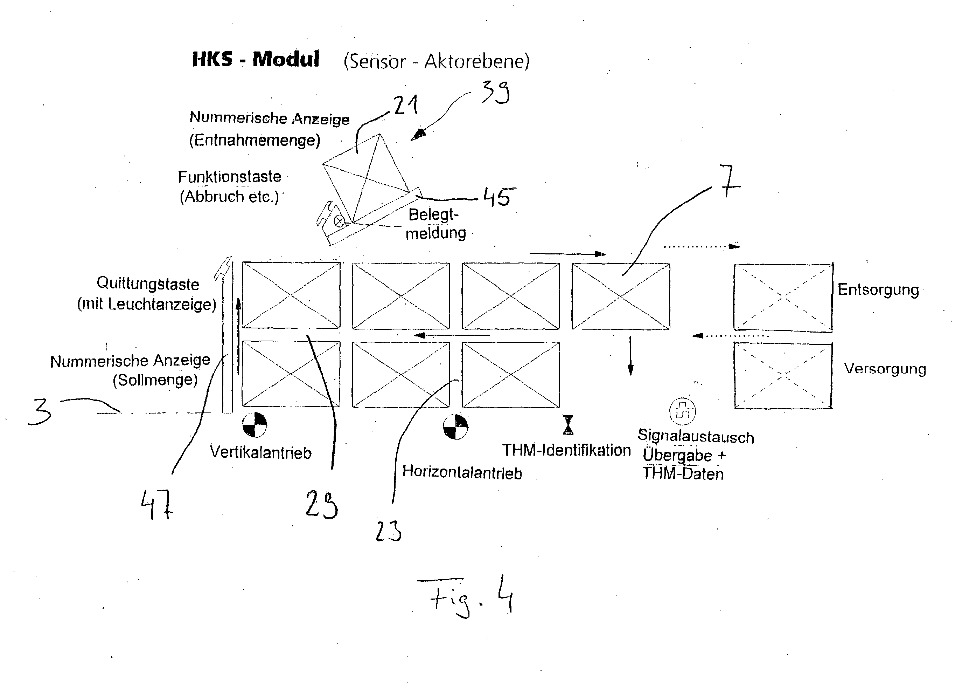

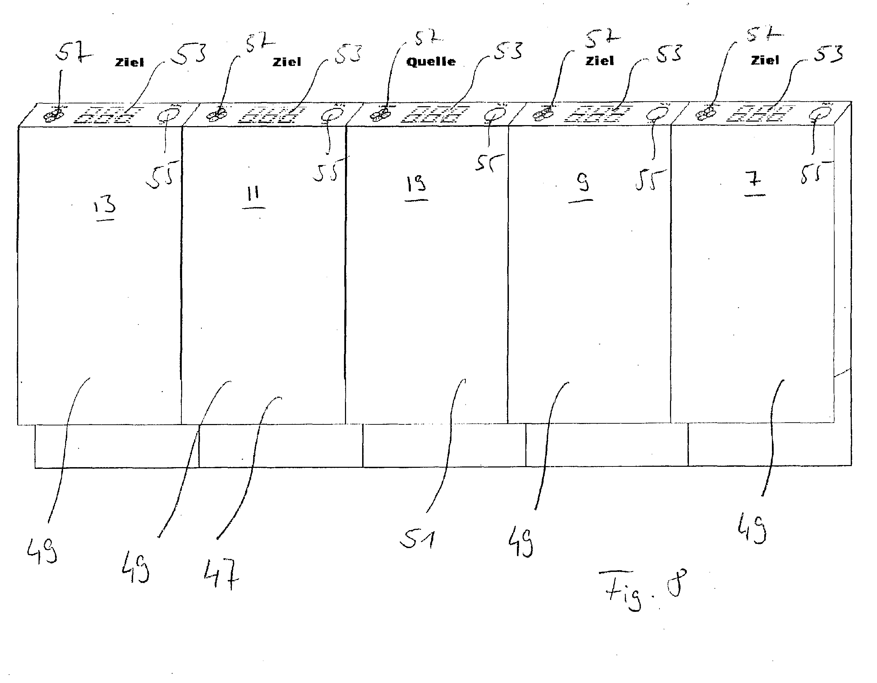

Figur 4 zeigt schematisch einer als Modul vorgesehenen Zielbehälter-Umlauffördervorrichtung 7 einer Kommissioniereinrichtung 1 gemäß einer Ausführungsform der Erfindung. Die Ausführungsform ist ähnlich zu der in den Figuren 2 und 3 gezeigten, wobei jedoch die Quellbehälterförderbahn 45 zum Kommissionierbereich 3 hin geneigt ist, sodass die Kommissionierperson leichter auf den Inhalt im Quellbehälter 21 zugreifen kann. Die Zielbehälter-Zuführeinrichtung 37 ist ebenfalls schematisch dargestellt. In der Figur 4 sind ferner verschiedene Antriebe für den Umlaufbetrieb dargestellt; so ist an der dem Kommissionierbereich 3 zugewandten Umlenkstelle 29 ein Vertikalmotorantrieb und in der unteren Förderstrecke 25 ein Horizontalmotorantrieb vorgesehen. Ferner sind diverse Sensoren zur Überwachung der Belegung und des sonstigen Betriebs der Zielbehälter-Umlauffördervorrichtung 7 und der Quellbehälter-Fördereinrichtung 39 vorgesehen. Ein Bedienpaneel 47 ist stirnseitig an der Umlenkstelle 29 dem Kommissionierbereich 3 zugewandt angeordnet. Das Bedienpaneel 47 kann z.B. wie in Figur 8 gezeigt strukturiert sein.

Figur 6 zeigt schematisch noch ein zum Schiebe-/Hubprinzip gemäß der Figuren 1-5 alternatives Umlaufprinzip für die Ziel- und/oder die Quellbehälter 15, 21. Und zwar werden die Behälter 15, 21 hiernach nach dem Paternosterprinzip eingehängt in einen umlaufenden Strang transportiert, wodurch nur eine Antriebsvorrichtung zum Antreiben des Strangs erforderlich ist und Hubeinrichtungen entfallen. Der in der Figur 6 an der linken Umlenkstelle 29 vorliegende Behälter 15, 21 steht einer sich stirnseitig vom Förderkreis 16 im Kommissionierbereich 3 stehenden Kommissionierperson zum Kommissionieren zur Verfügung; die Behälter 15, 21 können an der in Figur rechten Umlenkstelle 27 über einen Mechanismus 37, 39 in den Paternoster eingesetzt und daraus wieder entnommen werden.

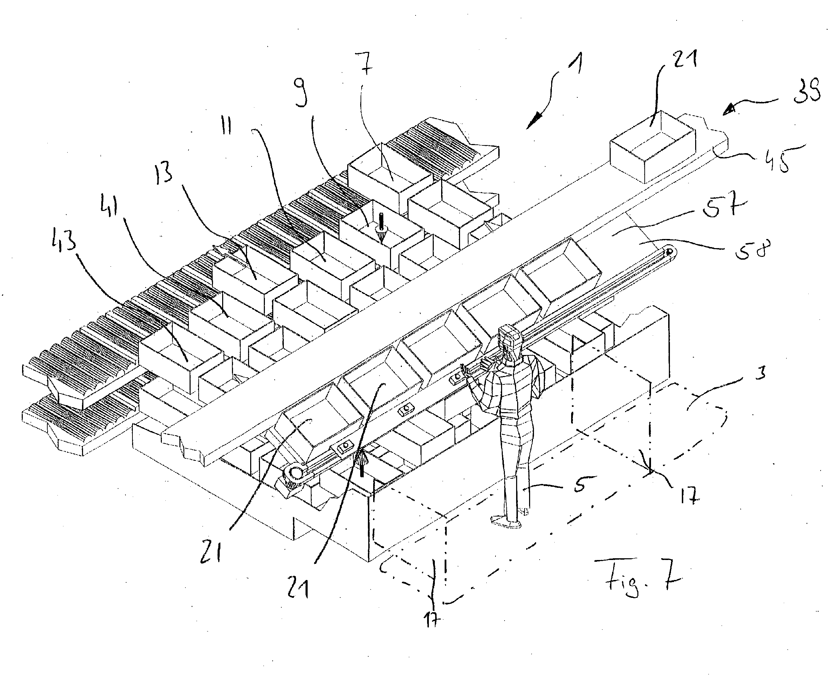

Die in Figur 7 dargestellte Kommissioniereinrichtung 1 ist im Wesentlichen wie die in Figuren 2 und 3 gezeigte Kommissioniereinrichtung 1 aufgebaut, sodass auf die entsprechende obige Beschreibung verwiesen wird. Ein Unterschied besteht darin, dass die in Figur 7 gezeigte Kommissioniereinrichtung 1 einen Kippmechanismus 57, mittels dessen die von der Transportbahn 45 der Quell-Behälterfördereinrichtung an den Kommissionierbereich 3 herangeförderten Quellbehälter 21 auf eine zu dem Kommissionierbereich 3 und damit zu der Kommissionierperson 5 hin geneigte Schrägfläche 58 gekippt werden, sodass die Kommissionierperson 5 besseren Zugriff zu den Artikeln in den Quellbehältern 21 hat. Die Schrägfläche 58 erstreckt mit ihrer Längsrichtung sich quer über sämtliche Zielbehälter-Umlauffördervorrichtungen 7, 9, 11, 13, 41, 43 und damit quer zu deren Förderkreisebenen 17. Damit hat die Kommissionierperson 5 gleichzeitigen Zugriff auf mehrere Quellbehälter 21.

Figur 8 zeigt eine Ausführungsform eines Bedienpaneels 47, wie z.B. für eine Kommissioniereinrichtung 1 gemäß der Ausführungsform von Figur 1 herangezogen werden kann (siehe schematisch gezeigtes Bedienpaneel 47 in Figur 1). Das Bedienpaneel 47 hat nach dieser Ausführungsform vier Ziel-Bedieneinheiten 49, die einer jeden der vier Zielbehälter-Umlauffördervorrichtungen 7, 9, 11, 13 zugeordnet sind, wobei die jeweilige Ziel-Bedieneinheit 49 genau fluchtend stirnseitig vor der jeweils zugehörigen Zielbehälter-Umlauffördervorrichtung 7, 9, 11, 13 positioniert und dem Kommissionierbereich 3 zugewandt ist. Mittig ist eine Quell-Bedieneinheit 51 angeordnet, die der Quellbehälter-Umlauffördervorrichtung 19 zugeordnet ist und demnach entsprechend der Ziel-Bedieneinheiten 49 den stirnseitigen Abschluss der Quellbehälter-Umlauffördervorrichtung 19 bildet.

Die jeweilige Bedieneinheit 49, 51 hat eine Anzeige 53, welche bei den Ziel-Bedieneinheiten 49 die Anzahl der Artikel anzeigt, die von dem momentan an der Quellbehälter-Umlauffördervorrichtung 19 zur Verfügung stehenden Quellbehälter in den momentan an der jeweiligen Zielbehälter-Umlauffördervorrichtung 7, 9, 11, 13 zur Verfügung stehenden Zielbehälter zu kommissionieren sind. Die Anzeige 53 der Quell-Bedieneinheit zeigt dagegen an, wieviele Artikel aus dem momentan zur Verfügung stehenden Quellbehälter in die momentan zur Verfügung gestellten Zielbehälter zu kommissionieren sind. Der Begriff "zur Verfügung stehen" bedeutet an dieser Stelle, dass die Kommissionierperson Zugriff zu diesem Behälter hat.

Eine jeweilige Quittiertaste 55 ist zu betätigen, wenn die Sollzahl an Artikel in den jeweiligen Zielbehälter eingebracht bzw. aus dem Quellbehälter entnommen ist. Ferner hat jede Bedieneinheit ein Mengen-Korrekturbedienfeld 57 für Fehl- und/oder Übermengen, mit welchem der Umlaufbetrieb der jeweiligen Behälter-Umlauffördereinrichtung 7, 9, 11, 13, 19 auch manuell steuerbar ist, z.B. die Umlaufrichtung einstellbar ist und/der der Umlaufbetrieb in Gang setzbar und wieder abschaltbar ist.

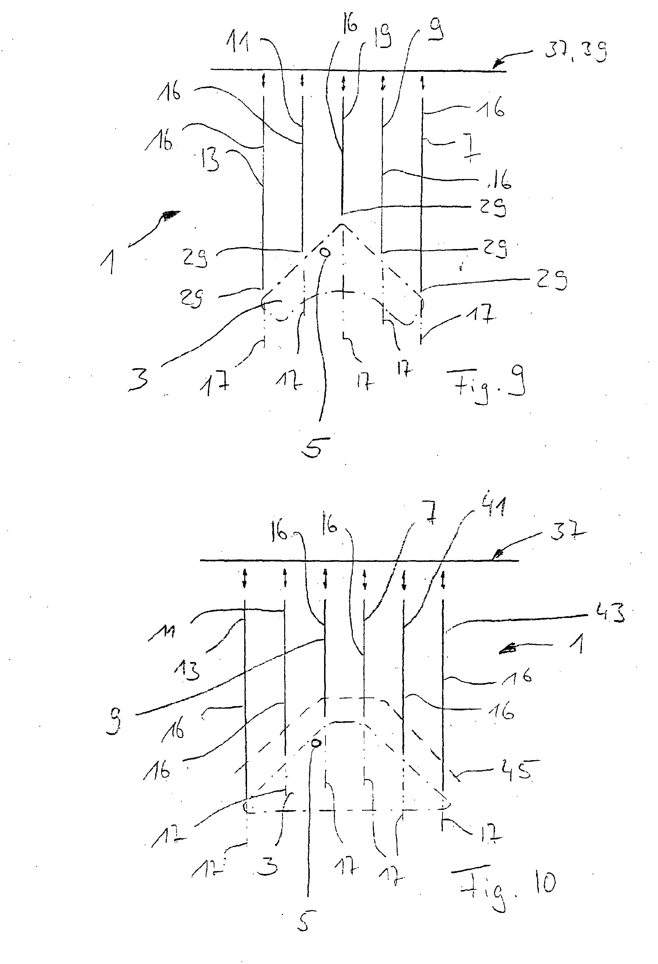

Die in den Figuren 1, 2 und 7 dargestellten Ausführungsformen der erfindungsgemäßen Kommissioniereinrichtung 1 zeigen deren Zielbehälter-Umlauffördervorrichtungen 7, 9, 11, 13, 41, 43 und Quellbehälter-Umlauffördervorrichtungen 19 als an der dem Kommissionierbereich 3 zugewandte Stirnseite in Richtung senkrecht zu den Förderkreisebenen 7 zueinander fluchtend angeordnet. Diesbezüglich zeigen die Figuren 9-12 alternative Ausführungsformen der Erfindung.

So erstrecken sich bei der Kommissioniereinrichtung 1 gemäß der Ausführungsform von Figur 9 vier Zielbehälter-Umlauffördervorrichtungen 7, 9, 11, 13 und eine dazu mittig angeordnete Quellbehälter-Umlauffördervorrichtung 19 mit ihren Förderkreisebenen 17 zwar parallel zueinander, jedoch sind die dem Kommissionierbereich 3 zugewandten Stirnenden der jeweiligen Förderkreise 16 von oben her gesehen zueinander derart versetzt angeordnet, dass sie eine dem Kommissionierbereich 3 zugewandte, umgedrehte V-Form bilden, wobei in diesem Falle der Förderkreis 16 der Quellbehälter-Umlauffördervorrichtung 19 am Schnittpunkt der V-Schenkel stirnseitig endet, d.h. er hat dort seine dem Kommissionierbereich 3 zugewandte Vertikal-Umlenkstelle 29, und die Förderkreise 16 der Zielbehälter-Umlauffördervorrichtungen 7, 9, 11, 13 enden stirnseitig jeweils symmetrisch an den V-Schenkeln, d.h. ihre dem Kommissionierbereich 3 zugewandten Vertikal-Umlenkstellen 29 sind an den V-Schenkeln angeordnet. Bei dieser Ausführungsform hat demnach eine Kommissionierperson 5 horizontal stirnseitigen Zugriff auf den stirnseitig auf der mittig angeordneten Quellbehälter-Umlauffördervorrichtung 19 positionierten Quellbehälter und hat ferner sowohl horizontal stirnseitigen und als auch horizontal seitlichen Zugriff auf die stirnseitig auf den seitlich der Quellbehälter-Umlauffördervorrichtung 19 angeordneten Zielbehälter-Umlauffördervorrichtungen 7, 9, 11, 13. Alle Umlauffördervorrichtungen 7, 9, 11, 13, 19 fördern wiederum auf den Kommissionierbereich 3 zu, die Quellbehälter-) Umlauffördervorrichtung direkt und die Zielbehälter-Umlauffördervorrichtungen in einem Winkel (bestimmt durch den Winkel des V). Zur Zuführung und Abführung von Zielbehältern/Quellbehältern an die Umlauffördervorrichtungen 7, 9, 11, 13, 19 kann die schematisch gezeigte Transportvorrichtung 37, 39 herangezogen werden.

Bei der in Figur 10 gezeigten Ausführungsform einer Kommissioniereinrichtung 1 handelt es sich um eine Alternative zu der in Figur 7 gezeigten Ausführungsform mit einer sich quer über die sechs Zielbehälter-Umlauffördervorrichtungen 7, 9, 11, 13, 41, 43 erstreckenden Transportvorrichtung 45 zum Zuführen und Abführen von Quellbehältern an den/vom Kommissionierbereich 3. Die Zielbehälter-Umlauffördervorrichtungen 7 und 9 sind mittig angeordnet und enden in der Draufsicht gesehen fluchtend am Kommissionierbereich 3, so dass die zugehörigen Förderkreisebenen 17 den Kommissionierbereich 3 frontal schneiden. Die dazu äußeren Zielbehälter-Umlauffördervorrichtungen 13, 9, 41 und 43 enden am Kommissionierbereich 3 in der Draufsicht gesehen derart versetzt, dass sich eine dem Kommissionierbereich 3 zugewandte, umgedrehte V-Form ergibt. Der Kommissionierbereich 3 erstreckt sich demnach in der Draufsicht gesehen (entsprechend der Ausführungsform von Figur 9) entlang der V-Form (definiert durch die dem Kommissionierbereich 3 zugewandten Stirnenden der Förderkreise 16 der Zielbehälter-Umlauffördervorrichtungen 7, 9, 11, 13, 41, 43), sodass die Förderkreisebenen 7 der vier äußeren Zielbehälter-Umlauffördervorrichtungen 13, 9, 41, 43 den Kommissionierbereich 3 gemäß dem V-Winkel schräg schneiden.

Bei dieser Ausführungsform hat demnach eine sich im Kommissionierbereich 3 befindende Kommissionierperson 5 horizontal stirnseitigen Zugriff auf die stirnseitig auf den mittig angeordneten Zielbehälter-Umlauffördervorrichtungen 7, 9 positionierten Quellbehälter und hat ferner sowohl horizontal stirnseitigen und als auch horizontal seitlichen Zugriff auf die stirnseitig auf den äußeren Zielbehälter-Umlauffördervorrichtungen 11, 13, 41, 43 angeordneten Zielbehälter.

Die Zielbehälterzuführung/-abführung erfolgt über eine Zielbehälter-Fördereinrichtung 37, die sich an dem Kommissionierbereich 3 abgewandten Ende der Zielbehälter-Umlauffördervorrichtungen 7, 9, 11, 13, 41, 43 erstreckt.

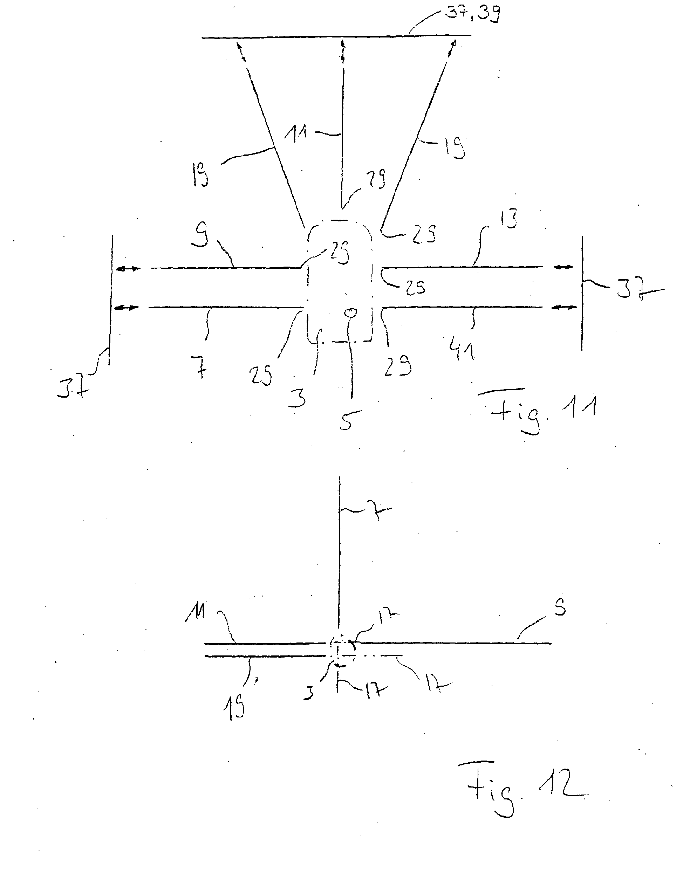

Bei der in Figur 11 in der Draufsicht schematisch dargestellten Variante einer Kommissioniereinrichtung 1 fördern die Zielbehälter- und/oder Quellbehälter-Umlauffördervorrichtungen 7, 9, 11, 13, 41, 19 fächerförmig auf den zentral angeordneten Kommissionierbereich 3 zu bzw. davon ab, wobei die Zufuhr/Abfuhr von Zielbehältern/Quellbehältern über Fördereinrichtungen 37, 39 erfolgt, die an dem Kommissionierbereich abgewandten Stirnenden der Umlauffördervorrichtungen 7, 9, 11, 14, 41, 19 entlang laufen. Auch eine sternförmige Anordnung der Umlauffördervorrichtungen 7, 9, 11, 14, 19, 43 bezüglich des zentral gelegenen Kommissionierbereichs 3 ist möglich.

Der Kommissionierbereich 3, in dem eine Kommissionierperson 5 auf die zugeführten Behälter zum Kommissionieren Zugriff hat, erstreckt sich jedes Mal entlang der ihm zugewandten Stirnenden (Vertikal-Umlenkstellen 29) der Umlauffördervorrichtungen 7, 9, 11, 13, 41, sodass sich deren (imaginären) vertikalen Förderkreisebenen 7 durch den Kommissionierbereich 3 hindurch erstrecken.

Eine diesbezüglich weitere Variante ist in Figur 12 schematisch in der Draufsicht dargestellt, wonach ein erster und ein zweiter Zielbehälter-Umlaufförderkreis 7, 9 mit ihren Förderkreisebenen 17 senkrecht zueinander verlaufen und ein dritter Zielbehälter-Umlaufförderkreis 11 und ein Quellbehälter-Umlaufförderkreis 19 zueinander parallel sowie senkrecht zum ersten 7 und parallel gegenüberliegend zum zweiten Zielbehälterförderkreis 9 verlaufen. Der Kommissionierbereich 3 befindet sich dann erfindungsgemäß mittig an der Kreuzungsstelle der Förderkreisebenen 17 der Umlaufförderkreise 7, 9, 11, 19.

Weitere Ausführungsbeispiele der Erfindung sind wie folgt:

Nach einem ersten weiteren Aspekt der Erfindung wird eine Kommissioniereinrichtung 1 bereitgestellt, mit einem Kommissionierbereich 3 zum Kommissionieren von Artikeln aus Quellbehältern 21 in Zielbehälter 15 durch eine sich im Kommissionierbereich 3 befindende Kommissionierperson 5, wenigstens einer benachbart zum Kommissionierbereich 3 angeordneten Zielbehälter-Umlauffördervorrichtung 7, 9, 11, 13, 41, 43, welche jeweils derart eingerichtet ist, dass von ihr mehrere Zielbehälter 15 entlang eines Zielbehälter-Förderkreises 16 in einer Förderkreisebene 17 umlaufend wiederholt der sich im Kommissionierbereich 3 befindenden Kommissionierperson 5 zuführt werden, bis der jeweilige Zielbehälter 15 bis zu einem vorbestimmten Grad, bevorzugt komplett, mit Artikeln aus einem oder mehreren Quellbehältern 21 kommissioniert ist, wobei die Förderkreisebene 17 des Zielbehälter-Förderkreises 16 der jeweiligen Zielbehälter-Umlauffördervorrichtung 7, 9, 11, 13, 41, 43 im Wesentlichen vertikal verläuft sowie den Kommissionierbereich 3 schneidet, und einer Zielbehälter-Fördereinrichtung 37 zum Zuführen und Abführen von Zielbehältern 15 an die wenigstens eine/von der wenigstens einen Zielbehälter-Umlauffördervorrichtung 7, 9, 11, 13, 41, 43.

Nach einem zweiten weiteren Aspekt der Erfindung ist die Kommissioniereinrichtung 1 gemäß dem ersten weiteren Aspekt ferner mit wenigstens einer benachbart zum Kommissionierbereich 3 angeordneten Quellbehälter-Umlauffördervorrichtung 19 ausgestattet, welche derart eingerichtet ist, dass von ihr mehrere Quellbehälter 21 entlang eines Quellbehälter-Förderkreises 16 in einer Förderkreisebene 17 umlaufend wiederholt der sich im Kommissionierbereich 3 befindenden Kommissionierperson 5 zuführt werden, bis aus dem jeweiligen Quellbehälter 21 eine vorbestimmte Anzahl von Artikeln, bevorzugt alle Artikel, in die Zielbehälter 15 kommissioniert sind, und mit einer Quellbehälter-Fördereinrichtung 39 ausgestattet zum Zuführen und Abführen von Quellbehältern 21 an die wenigstens eine/von der wenigstens einen Quellbehälter-Umlauffördervorrichtung 19, wobei die Förderkreisebene 17 des Quellbehälter-Förderkreises 16 der jeweiligen Quellbehälter-Umlauffördervorrichtung 19 vertikal verläuft sowie den Kommissionierbereich 3 schneidet.

Nach einem dritten weiteren Aspekt der Erfindung sind bei der Kommissioniereinrichtung gemäß dem ersten weiteren oder dem zweiten weiteren Aspekt mehrere Zielbehälter-Umlauffördervorrichtungen 7, 9, 11, 13, 41, 43 und/oder mehrere Quellbehälter-Umlauffördervorrichtung 19 mit parallel zueinander verlaufenden Förderkreisebenen 17 in Reihe nebeneinander angeordnet.

Nach einem vierten weiteren Aspekt der Erfindung sind bei der Kommissioniereinrichtung gemäß dem dritten weiteren Aspekt die Zielbehälter-Umlauffördervorrichtungen 7, 9, 11, 13, 41, 43 und/oder die Quellbehälter-Umlauffördervorrichtungen 19 horizontal entlang ihrer Förderkreiskreisebenen 17 derart zueinander versetzt angeordnet, dass sie in der Draufsicht eine dem Kommissionierbereich zugewandte, umgedrehte V-Form beschreiben.

Nach einem fünften weiteren Aspekt der Erfindung sind bei der Kommissioniereinrichtung nach einem des ersten bis dritten weiteren Aspekts mehrere Zielbehälter-Umlauffördervorrichtungen 7, 9, 11, 13, 41, 43 und/oder Quellbehälter-Umlauffördervorrichtungen 19 mit ihren Förderkreisebenen in einem Winkel, wie z.B. einem 90° Winkel, zueinander verlaufend angeordnet.

Nach einem sechsten weiteren Aspekt der Erfindung sind bei der Kommissioniereinrichtung 1 nach einem des zweiten bis fünften weiteren Aspekts die Zielbehälter-Umlauffördervorrichtung/en 7, 9, 11, 13, 41, 43 und/oder die Quellbehälter-Umlauffördervorrichtung/en 19 als zueinander identische Module ausgeführt, so dass sie beliebig aneinander anreihenbar und/oder gegeneinander austauschbar sind.

Nach einem siebten weiteren Aspekt der Erfindung sind bei der Kommissioniereinrichtung 1 nach einem des zweiten bis sechsten Aspekts die Zielbehälter 15 und die Quellbehälter 21 baugleich ausgeführt.

Nach einem achten weiteren Aspekt der Erfindung sind bei der Kommissioniereinrichtung 1 nach einem des zweiten bis fünften Aspekts die Zielbehälter-Umlauffördervorrichtung/en 7, 9, 11, 13, 41, 43 und/oder die Quellbehälter-Umlauffördervorrichtung/en 19, bevorzugt in Laufrichtung der Zu- und Abführtrumms der Ziel-/Quellbehälter-Förderkreise 16 lineargeführt aneinander anbringbar und voneinander lösbar.

Nach einem neunten weiteren Aspekt der Erfindung ist bei Kommissioniereinrichtung 1 nach einem der vorhergehenden weiteren Aspekte der Zielbehälter-Förderkreis 16 der jeweiligen Zielbehälter-Umlauffördervorrichtung 7, 9, 11, 13, 41, 43 und/oder der Quellbehälter-Förderkreis 16 der jeweiligen Quellbehälter-Umlauffördervorrichtung 19 mit zwei im Vertikalabstand voneinander angeordneten, bevorzugt parallelen, Linearförderstrecken 23, 25 mit einem jeweiligen Antrieb zum automatischen Bewegen der Zielbehälter 15 bzw. der Quellbehälter 21 sowie an den Enden der Linearförderstrecken jeweils mit einer Hubeinrichtung ausgestattet zum automatischen Umsetzen der Zielbehälter 15 bzw. der Quellbehälter 21 von der einen auf die jeweilige andere Linearförderstrecke 23, 25.

Nach einem zehnten weiteren Aspekt der Erfindung ist bei der Kommissioniereinrichtung 1 nach dem neunten weiteren Aspekt der Antrieb der unteren Linearförderstrecke 25 als Schwerkraftantrieb ausgebildet und der Antrieb der oberen Linearförderstrecke 23 als Elektromotorantrieb ausgebildet.

Nach einem elften weiteren Aspekt der Erfindung weist bei der Kommissioniereinrichtung 1 nach einem der vorhergehenden weiteren Aspekte die jeweilige Zielbehälter-Umlauffördervorrichtung 7, 9, 11, 13, 41, 43 und/oder die jeweilige Quellbehälter-Umlauffördervorrichtung 19 mehrere fest im Zielbehälter-Förderkreis 16 bzw. im Quellbehälter-Förderkreis 16 vorgesehene und damit umlaufende Tragmittel, wie z.B. Tragplatten, zur Aufnahme der Zielbehälter 15 bzw. der Quellbehälter auf 21.

Nach einem zwölften weiteren Aspekt der Erfindung sind bei der Kommissioniereinrichtung 1 nach einem der vorhergehenden weiteren Aspekte in der jeweiligen Zielbehälter-Umlauffördervorrichtung 7, 9, 11, 13, 41, 43 und/oder in der jeweiligen Quellbehälter-Umlauffördervorrichtung 19 eine Vielzahl von Zielbehältern 15 bzw. Quellbehältern (21), bevorzugt wenigstens vier, besonders bevorzugt wenigstens sechs, kreisförderbar.

Nach einem dreizehnten weiteren Aspekt der Erfindung wird ein Verfahren bereitgestellt zum Kommissionieren von Artikeln aus Quellbehältern 21 in Zielbehälter 15 durch eine sich in einem Kommissionierbereich 3 befindende Kommissionierperson 5, bevorzugt unter Verwendung einer Kommissioniereinrichtung 1 nach einem der vorhergehenden weiteren Aspekte, wobei der Kommissionierperson 5 ein Quellbehälter 21 mit diesem Quellbehälter 21 zugeordneten Artikeln automatisch zugeführt wird, wobei mittels wenigstens einer benachbart zum Kommissionierbereich 3 angeordneten Zielbehälter-Umlauffördervorrichtung 7, 9, 11, 13, 41, 43 mehrere, bevorzugt eine Vielzahl wie Beispielsweise wenigstens vier oder fünf oder besonders bevorzugt wenigstens sechs, Zielbehälter 15 entlang eines Zielbehälter-Förderkreises 16 der sich im Kommissionierbereich 3 befindenden Kommissionierperson 5 umlaufend wiederholt solange zugeführt werden, bis der jeweilige sich im Umlauf befindende Zielbehälter 15 mit den Artikeln aus dem zugeführten Quellbehälter 21 in der gewünschten Zahl kommissioniert ist.

Nach einem vierzehnten weiteren Aspekt der Erfindung wird bei dem Verfahren nach dem dreizehnten weiteren Aspekt dann der Kommissionierperson 5 ein anderer Quellbehälter 21 mit diesem zugeordneten anderen Artikeln zur entsprechenden Kommissionierung in den jeweiligen sich im Umlauf befindenden Zielbehälter 15 zugeführt, wobei die Zielbehälter 15 solange in der Zielbehälter-Umlauffördervorrichtung im Umlauf bleiben, bis sie mit den gewünschten Artikeln in der entsprechend gewünschten Anzahl kommissioniert sind, bevorzugt komplett kommissioniert sind, um dann von einer Zielbehälter-Fördereinrichtung 37 von der Zielbehälter-Umlauffördervorrichtung 7, 9, 11, 13, 41, 43 abgeführt zu werden.

Nach einem fünfzehnten weiteren Aspekt der Erfindung wird bei dem Verfahren nach dem dreizehnten oder vierzehnten weiteren Aspekt, wenn der zugeführte Quellbehälter 21 leer wird, bevor der jeweilige Zielbehälter 15 mit den Artikeln des leer gewordenen Quellbehälters 21 in der gewünschten Anzahl kommissioniert ist, der Kommissionierperson 5 ein anderer Quellbehälter 21 mit diesem Quellbehälter 21 zugeordneten Artikeln, die denen des leeren Quellbehälters 21 entsprechen, zugeführt.

Nach einem sechzehnten weiteren Aspekt der Erfindung werden bei dem Verfahren nach einem des dreizehnten bis fünfzehnten Aspekts mittels wenigstens einer benachbart zum Kommissionierbereich 3 angeordneten Quellbehälter-Umlauffördervorrichtung 19 mehrere, bevorzugt eine Vielzahl wie Beispielsweise wenigstens vier oder fünf oder besonders bevorzugt wenigstens sechs Quellbehälter 21 entlang eines Quellbehälter-Förderkreises 16 umlaufend wiederholt der Kommissionierperson 5 zugeführt, bis aus dem jeweiligen Quellbehälter 21 eine vorbestimmte Anzahl von Artikeln, bevorzugt alle Artikel, in die Zielbehälter 15 kommissioniert sind, wobei mittels einer Quellbehälter-Fördereinrichtung 39 die Quellbehälter 21 an die wenigstens eine/von der wenigstens einen Quellbehälter-Umlauffördervorrichtung 19 zugeführt/abgeführt werden.

## Patentansprüche

1. Kommissioniereinrichtung (1) mit
- einem Kommissionierbereich (3) zum Kommissionieren von Artikeln aus Quellbehältern (21) in Zielbehälter (15) durch eine sich im Kommissionierbereich (3) befindende Kommissionierperson (5),
- mehreren benachbart zum Kommissionierbereich (3) angeordneten Zielbehälter-Umlauffördervorrichtungen (7, 9, 11, 13, 41, 43), von welchen jede jeweils derart eingerichtet ist, dass von ihr mehrere Zielbehälter (15) entlang eines Zielbehälter-Förderkreises (16) in einer Förderkreisebene (17) umlaufend wiederholt der sich im Kommissionierbereich (3) befindenden Kommissionierperson (5) zuführt werden, bis der jeweilige Zielbehälter (15) bis zu einem vorbestimmten Grad, bevorzugt komplett, mit Artikeln aus einem oder mehreren Quellbehältern (21) kommissioniert ist, wobei die Förderkreisebene (17) des Zielbehälter-Förderkreises (16) der jeweiligen Zielbehälter-Umlauffördervorrichtung (7, 9, 11, 13, 41, 43) vertikal verläuft sowie den Kommissionierbereich (3) schneidet,
- einer Zielbehälter-Fördereinrichtung (37) zum Zuführen und Abführen von Zielbehältern (15) an die jeweilige/von der jeweiligen Zielbehälter-Umlauffördervorrichtung (7, 9, 11, 13, 41, 43) und
- einer Quellbehälter-Fördertechnik (39, 19; 45) zum automatischen Fördern von Quellbehältern (21) von einem Artikellager zum Kommissionierbereich (3) und zum automatischen Zurückfördern von Quellbehältern (21) von dem Kommissionierbereich (3) zum Artikellager.

2. Kommissioniereinrichtung (1) nach Anspruch 1, wobei die Quellbehälter-Fördertechnik aufweist: wenigstens eine benachbart zum Kommissionierbereich (3) angeordnete Quellbehälter-Umlauffördervorrichtung (19), welche derart eingerichtet ist, dass von ihr mehrere Quellbehälter (21) entlang eines Quellbehälter-Förderkreises (16) in einer Förderkreisebene (17) umlaufend wiederholt der sich im Kommissionierbereich (3) befindenden Kommissionierperson (5) zuführt werden, bis aus dem jeweiligen Quellbehälter (21) eine vorbestimmte Anzahl von Artikeln, bevorzugt alle Artikel, in die Zielbehälter (15) kommissioniert sind, und mit einer Quellbehälter-Fördereinrichtung (39) zum Zuführen und Abführen von Quellbehältern (21) an die wenigstens eine/von der wenigstens einen Quellbehälter-Umlauffördervorrichtung (19), wobei die Förderkreisebene (17) des Quellbehälter-Förderkreises (16) der jeweiligen Quellbehälter-Umlauffördervorrichtung (19) vertikal verläuft sowie den Kommissionierbereich ( 3) schneidet.

3. Kommissioniereinrichtung (1) nach Anspruch 1 oder 2, wobei die Zielbehälter-Umlauffördervorrichtungen (7, 9, 11, 13, 41, 43) und/oder mehrere Quellbehälter-Umlauffördervorrichtungen (19) mit parallel zueinander verlaufenden Förderkreisebenen (17) in Reihe nebeneinander angeordnet sind, wobei die Zielbehälter-Umlauffördervorrichtungen (7, 9, 11, 13, 41, 43) und/oder die Quellbehälter-Umlauffördervorrichtungen (19) bevorzugt horizontal entlang ihrer Förderkreiskreisebenen (17) derart zueinander versetzt angeordnet sind, dass sie in der Draufsicht eine dem Kommissionierbereich zugewandte, umgedrehte V-Form beschreiben, oder wobei die Zielbehälter-Umlauffördervorrichtungen (7, 9, 11, 13, 41, 43) und/oder die Quellbehälter-Umlauffördervorrichtungen (19) bevorzugt mit ihren Förderkreisebenen in einem Winkel, wie z.B. einem 90° Winkel, zueinander verlaufend angeordnet sind.

4. Kommissioniereinrichtung (1) nach einem der Ansprüche 2 bis 3, wobei die Zielbehälter-Umlauffördervorrichtungen (7, 9, 11, 13, 41, 43) und/oder die Quellbehälter-Umlauffördervorrichtung/en (19) als zueinander identische Module ausgeführt sind, so dass sie beliebig aneinander anreihenbar und/oder gegeneinander austauschbar ist.

5. Kommissioniereinrichtung (1) nach einem der Ansprüche 2 bis 4, wobei die Zielbehälter (15) und die Quellbehälter (21) baugleich ausgeführt sind.

6. Kommissioniereinrichtung (1) nach einem der Ansprüche 2 bis 5, wobei die Zielbehälter-Umlauffördervorrichtungen (7, 9, 11, 13, 41, 43) und/oder die Quellbehälter-Umlauffördervorrichtung/en (19), bevorzugt in Laufrichtung der Zu- und Abführtrumms der Ziel-/Quellbehälter-Förderkreise (16), lineargeführt aneinander anbringbar und voneinander lösbar sind.

7. Kommissioniereinrichtung (1) nach einem der vorhergehenden Ansprüche, wobei der Zielbehälter-Förderkreis (16) der jeweiligen Zielbehälter-Umlauffördervorrichtung (7, 9, 11, 13, 41, 43) und/oder der Quellbehälter-Förderkreis (16) der jeweiligen Quellbehälter-Umlauffördervorrichtung (19) zwei im Vertikalabstand voneinander angeordnete, bevorzugt parallele, Linearförderstrecken (23, 25) mit einem jeweiligen Antrieb zum automatischen Bewegen der Zielbehälter (15) bzw. der Quellbehälter (21) sowie an den Enden der Linearförderstrecken jeweils eine Hubeinrichtung aufweist zum automatischen Umsetzen der Zielbehälter (15) bzw. der Quellbehälter (21) von der einen auf die jeweilige andere Linearförderstrecke (23, 25), wobei der Antrieb der unteren Linearförderstrecke (25) bevorzugt als Schwerkraftantrieb ausgebildet und der Antrieb der oberen Linearförderstrecke (23) bevorzugt als Elektromotorantrieb ausgebildet ist.

8. Kommissioniereinrichtung (1) nach einem der vorhergehenden Ansprüche, wobei die jeweilige Zielbehälter-Umlauffördervorrichtung (7, 9, 11, 13, 41, 43) und/oder die jeweilige Quellbehälter-Umlauffördervorrichtung (19) mehrere fest im Zielbehälter-Förderkreis (16) bzw. im Quellbehälter-Förderkreis (16) vorgesehene und damit umlaufende Tragmittel, wie z.B. Tragplatten, zur Aufnahme der Zielbehälter (15) bzw. der Quellbehälter aufweist (21).

9. Kommissioniereinrichtung (1) nach einem der vorhergehenden Ansprüche, wobei in der jeweiligen Zielbehälter-Umlauffördervorrichtung (7, 9, 11, 13, 41, 43) und/oder in der jeweiligen Quellbehälter-Umlauffördervorrichtung (19) eine Vielzahl von Zielbehältern (15) bzw. Quellbehältern (21), bevorzugt wenigstens vier, besonders bevorzugt wenigstens sechs, kreisförderbar sind.

10. Kommissioniereinrichtung (1) nach einem der vorhergehenden Ansprüche, wobei der Umlaufbetrieb der jeweiligen Zielbehälter-Umlauffördervorrichtung (7, 9, 11, 13, 41, 43) in seiner Richtung umkehrbar ist, sodass die im zugehörenden Zielbehälter-Förderkreis (16) sich befindenden Zielbehälter (15) wahlweise in die eine und in die andere Umlaufrichtung gefördert werden.

11. Verfahren zum Kommissionieren von Artikeln aus Quellbehältern (21) in Zielbehälter (15) durch eine sich in einem Kommissionierbereich (3) befindende Kommissionierperson (5), bevorzugt unter Verwendung einer Kommissioniereinrichtung (1) nach einem der vorhergehenden Ansprüche, wobei der Kommissionierperson (5) ein Quellbehälter (21) mit diesem Quellbehälter (21) zugeordneten Artikeln automatisch zugeführt wird, wobei mittels mehreren benachbart zum Kommissionierbereich (3) angeordneten Zielbehälter-Umlauffördervorrichtungen (7, 9, 11, 13, 41, 43) mit jeweils einem Zielbehälter-Förderkreis (16), wobei die Förderkreisebene (17) des Zielbehälter-Förderkreises (16) der jeweiligen Zielbehälter-Umlauffördervorrichtung (7, 9, 11, 13, 41, 43) vertikal verläuft sowie den Kommissionierbereich (3) schneidet, pro Zielbehälter-Förderkreis (16) mehrere, bevorzugt eine Vielzahl wie Beispielsweise wenigstens vier oder fünf oder besonders bevorzugt wenigstens sechs, Zielbehälter (15) entlang des jeweiligen Zielbehälter-Förderkreises (16) der sich im Kommissionierbereich (3) befindenden Kommissionierperson (5) umlaufend wiederholt solange zugeführt werden, bis der jeweilige sich im Umlauf befindende Zielbehälter (15) mit den Artikeln aus dem zugeführten Quellbehälter (21) in der gewünschten Zahl kommissioniert ist.

12. Verfahren nach Anspruch 11, wobei dann der Kommissionierperson (5) ein anderer Quellbehälter (21) mit diesem zugeordneten anderen Artikeln zur entsprechenden Kommissionierung in den jeweiligen sich im Umlauf befindenden Zielbehälter (15) zugeführt wird, und wobei die Zielbehälter (15) solange in der Zielbehälter-Umlauffördervorrichtung im Umlauf bleiben, bis sie mit den gewünschten Artikeln in der entsprechend gewünschten Anzahl kommissioniert sind, bevorzugt komplett kommissioniert sind, um dann von einer Zielbehälter-Fördereinrichtung (37) von der Zielbehälter-Umlauffördervorrichtung (7, 9, 11, 13, 41, 43) abgeführt zu werden.

13. Verfahren nach Anspruch 11 oder 12, wobei, wenn der zugeführte Quellbehälter (21) leer wird, bevor der jeweilige Zielbehälter (15) mit den Artikeln des leer gewordenen Quellbehälters (21) in der gewünschten Anzahl kommissioniert ist, der Kommissionierperson (5) ein anderer Quellbehälter (21) mit diesem Quellbehälter (21) zugeordneten Artikeln, die denen des leeren Quellbehälters (21) entsprechen, zugeführt wird.

14. Verfahren nach einem der Ansprüche 11 bis 13, wobei mittels wenigstens einer benachbart zum Kommissionierbereich (3) angeordneten Quellbehälter-Umlauffördervorrichtung (19) mehrere, bevorzugt eine Vielzahl wie Beispielsweise wenigstens vier oder fünf oder besonders bevorzugt wenigstens sechs Quellbehälter (21) entlang eines Quellbehälter-Förderkreises (16) umlaufend wiederholt der Kommissionierperson (5) zugeführt werden, bis aus dem jeweiligen Quellbehälter (21) eine vorbestimmte Anzahl von Artikeln, bevorzugt alle Artikel, in die Zielbehälter (15) kommissioniert sind, und wobei mittels einer Quellbehälter-Fördereinrichtung (39) die Quellbehälter (21) an die wenigstens eine/von der wenigstens einen Quellbehälter-Umlauffördervorrichtung (19) zugeführt/abgeführt werden.

15. Verfahren nach einem der Ansprüche 11 bis 14, wobei die Zielbehälter (15) im jeweiligen Zielbehälter-Förderkreis (16) wahlweise in die eine und in die andere Umlaufrichtung gefördert werden.

## Claims

1. Picking device (1), comprising:
- a picking area (3) for picking articles from source containers (21) into target containers (15) by a picking person (5) located in the picking area (3),
- several target container revolving conveying devices (7, 9, 11, 13, 41, 43) arranged adjacent to the picking area (3), each of which being configured in such a manner that several target containers (15) are supplied thereby to the picking person (5) located in the picking area (3) in a revolving and repeated manner along a target container conveying circuit (16) in a conveying circuit plane (17) until the respective target container (15) is loaded with articles from one or a plurality of source containers (21) up to a predetermined degree, preferably completely, wherein the conveying circuit plane (17) of the target container conveying circuit (16) of the respective target container revolving conveying device (7, 9, 11, 13, 41, 43) extends vertically and crosses the picking area (3),
- a target container conveying installation (37) for supplying and discharging target containers (15) to/from the respective target container revolving conveying device (7, 9, 11, 13, 41, 43), and
- a source container conveyance (39, 19, 45) for automatically conveying source containers (21) from an article storage to the picking area (3) and for automatically returning source containers (21) from the picking area (3) to the article storage.

2. Picking device according to claim 1, wherein the source container conveyance comprises: at least one source container revolving conveying device (19) located adjacent to the picking area (3), which is configured in such a manner that several source containers (21) are supplied thereby in a revolving and repeated manner to the picking person (5) located in the picking area (3) along a source container conveying circuit (16) in a conveying circuit plane (17) until a predetermined number of articles, preferably all articles, is/are picked from the respective source container (21) into the target containers (15), and having a source container conveying installation (39) for supplying and discharging source containers (21) to/from the at least one source container revolving conveying device (19), wherein the conveying circuit plane (17) of the source container conveying circuit (16) of the respective source container revolving conveying device (19) extends vertically and crosses the picking area (3).

3. Picking device (1) according to claim 1 or 2, wherein the target container revolving conveying devices (7, 9, 11, 13, 41, 43) and/or several source container revolving conveying devices (19) are arranged in a row next to each other with conveying circuit planes (17) extending in parallel to each other, wherein the target container revolving conveying devices (7, 9, 11, 13, 41, 43) and/or the source container revolving conveying devices (19) are arranged preferably horizontally along their conveying circuit planes (17) to be offset relative to each other in such a manner that they describe in a plan view a reversed V-shape facing the picking area, or wherein the target container revolving conveying devices (7, 9, 11, 13, 41, 43) and/or the source container revolving conveying devices (19) preferably are arranged with their conveying circuit planes extending toward each other at an angle, for example an angle of 90°.

4. Picking device (1) according to any of claims 2 to 3, wherein the target container revolving conveying devices (7, 9, 11, 13, 41, 43) and/or the source container revolving conveying device/s (19) are provided as modules identical to each other, so that they can be connected in a row relative to each other and/or replaced with each other in an arbitrary manner.

5. Picking device (1) according to any of claims 2 to 4, wherein the target containers (15) and the source containers (21) are designed to be identical in construction.

6. Picking device (1) according to any of claims 2 to 5, wherein the target container revolving conveying devices (7, 9, 11, 13, 41, 43) and/or the source container revolving conveying device/s (19) can be attached to each other and released from each other in a linearly guided manner, preferably in the moving direction of the supply and discharge strands of the target/source container conveying circuits (16).

7. Picking device (1) according to any of the preceding claims, wherein the target container conveying circuit (16) of the respective target container revolving conveying device (7, 9, 11, 13, 41, 43) and/or the source container conveying circuit (16) of the corresponding source container revolving conveying device (19) comprises two preferably parallel linear conveying paths (23, 25) arranged at a vertical distance from each other and having a respective drive for automatically moving the target containers (15) and the source containers (21), respectively, and a respective lifting device at the ends of the linear conveying paths for automatically transferring the target containers (15) and the source containers (21), respectively, from the one to the other linear conveying path (23, 25), wherein the drive of the lower linear conveying path (25) is preferably configured as a gravity drive and the drive of the upper linear conveying path (23) is preferably configured as an electric motor drive.

8. Picking device (1) according to any of the preceding claims, wherein the corresponding target container revolving conveying device (7, 9, 11, 13, 41, 43) and/or the corresponding source container revolving conveying device (19) comprise/s several carrier means, such as carrier plates, fixedly provided in the target container conveying circuit (16) and in the source container conveying circuit (16), respectively, revolving therewith and provided for receiving the target containers (15) and the source containers (21), respectively.

9. Picking device (1) according to any of the preceding claims, wherein in the respective target container revolving conveying device (7, 9, 11, 13, 41, 43) and/or in the respective source container revolving conveying device (19) a plurality of target containers (15) and source containers (21), respectively, preferably at least four, in a particularly preferred manner at least six, are circularly conveyable.

10. Picking device (1) according to any of the preceding claims, wherein the revolving operation of the respective target container revolving conveying device (7, 9, 11, 13, 41, 43) is reversible in its direction, so that the target containers (15) located in the corresponding target container conveying circuit (16) are conveyed selectively in the one or in the other revolving direction.

11. Method for picking articles from source containers (21) into target containers (15) by a picking person (5) located in a picking area (3), preferably by using a picking device (1) according to any of the preceding claims, wherein a source container (21) with articles assigned to said source container (21) is automatically supplied to the picking person (5), wherein by means of several target container revolving conveying devices (7, 9, 11, 13, 41, 43) which are arranged adjacent to the picking area (3) with respectively one target container conveying circuit (16), the conveying circuit plane (17) of the target container conveying circuit (16) of the respective target container revolving conveying device (7, 9, 11, 13, 41, 43) extending vertically and crossing the picking area (3), several, preferably a plurality of, such as at least four or five or in a particularly preferred manner at least six target containers (15) per target container conveying circuit (16) are supplied to the picking person (5) located in the picking area (3) in a revolving and repeated manner along the respective target container conveying circuit (16) until the respective revolving target container (15) is loaded with the articles from the supplied source container (21) in the desired number.

12. Method according to claim 11, wherein then another source container (21) with other articles assigned thereto is supplied to the picking person (5) for corresponding loading into the respective revolving target container (15), and wherein the target containers (15) remain revolving in the target container revolving conveying device until they are loaded with the desired articles in the respectively desired number, preferably loaded completely, to be then discharged from the target container revolving conveying device (7, 9, 11, 13, 41, 43) by means of a target container conveying installation (37).

13. Method according to claim 11 or 12, wherein, when the supplied source container (21) becomes empty before the respective target container (15) is loaded with the desired number of the articles of the source container (21) which has become empty, another source container (21) with articles assigned to this source container (21) which correspond to those of the empty source container (21) is supplied to the picking person (5).

14. Method according any of claims 11 to 13, wherein several, preferably a plurality of, such as at least four or five, or in a particularly preferred manner at least six source containers (21) are supplied to the picking person (5) along a source container conveying circuit (16) in a revolving and repeated manner by means of at least one source container revolving conveying device (19) arranged adjacent to the picking area (3), until a predetermined number of articles, preferably all articles is/are picked from the respective source container (21) into the target containers (15), and wherein the source containers (21) are supplied to/discharged from the at least one source container revolving conveying device (19) by means of a source container conveying installation (39).

15. Method according to any of claims 11 to 14,
wherein the target containers (15) in the respective target container conveying circuit (16) are selectively conveyed.

## Revendications

1. Dispositif de préparation des commandes (1), comportant
- une zone de préparation des commandes (3) pour préparer et rassembler des articles, issus de conteneurs source (21), dans des conteneurs cible (15), par une personne de service (5) située dans la zone de préparation des commandes (3),
- plusieurs élévateurs transporteurs continus pour conteneurs cible (7, 9, 11, 13, 41, 43), qui sont disposés au voisinage de la zone de préparation des commandes (3) et parmi lesquels chacun est configuré de telle sorte qu'il est apte à acheminer de manière répétée en continu plusieurs conteneurs cible (15) le long d'un circuit de transport pour conteneurs cible (16) dans un plan de transport (17) vers la personne de service (5) située dans la zone de préparation des commandes (3), jusqu'à ce que le conteneur cible (15) respectif soit préparé jusqu'à un niveau prédéterminé, de préférence complètement, avec des articles issus d'un ou de plusieurs conteneurs source (21), sachant que le plan de transport (17) du circuit de transport pour conteneurs cible (16) de l'élévateur transporteur continu pour conteneurs cible (7, 9, 11, 13, 41, 43) est orienté verticalement et coupe la zone de préparation des commandes (3),
- un dispositif de transport pour conteneurs cible (37), destiné à acheminer et évacuer les conteneurs cible (15) vers le ou hors de l'élévateur transporteur continu pour conteneurs cible (7, 9, 11, 13, 41, 43) respectif, et
- une technique de transport des conteneurs source (39, 19 ; 45) destinée à transporter automatiquement des conteneurs source (21) depuis un entrepôt de marchandises vers la zone de préparation des commandes (3) et destinée à ramener automatiquement les conteneurs source (21) depuis la zone de préparation des commandes (3) vers l'entrepôt de marchandises.

2. Dispositif de préparation des commandes (1) selon la revendication 1, dans lequel la technique de transport des conteneurs source comporte : au moins un élévateur transporteur continu pour conteneurs
source (19), qui est disposé au voisinage de la zone de préparation des commandes (3) et qui est configuré de telle sorte qu'il est apte à acheminer de manière répétée en continu plusieurs conteneurs source (21) le long d'un circuit de transport pour conteneurs source (16) dans un plan de transport (17) vers la personne de service (5) située dans la zone de préparation des commandes (3), jusqu'à ce qu'un nombre prédéterminé d'articles, de préférence tous les articles, soient retirés hors du conteneur source (21) respectif et déposés dans les conteneurs cible (15), et comportant un dispositif de transport pour conteneurs source (39), destiné à acheminer et évacuer les conteneurs source (21) vers ledit au moins un ou hors dudit au moins un élévateur transporteur continu pour conteneurs source (19), sachant que le plan de transport (17) du circuit de transport pour conteneurs source (16) de l'élévateur transporteur continu pour conteneurs source (19) est orienté verticalement et coupe la zone de préparation des commandes (3).

3. Dispositif de préparation des commandes (1) selon la revendication 1 ou 2, dans lequel les élévateurs transporteurs continus pour conteneurs cible (7, 9, 11, 13, 41, 43) et/ou plusieurs élévateurs transporteurs continus pour conteneurs source (19) sont disposés en rangs les uns à côté des autres avec des plans de transport (17) orientés parallèlement entre eux, dans lequel les élévateurs transporteurs continus pour conteneurs cible (7, 9, 11, 13, 41, 43) et/ou les élévateurs transporteurs continus pour conteneurs source (19) sont disposés de préférence horizontalement le long de leurs plans de transport (17) en étant décalés entre eux de telle sorte que, sur la vue en élévation, ils décrivent une forme de V inversé, orienté vers la zone de préparation des commandes, ou en ce que les élévateurs transporteurs continus pour conteneurs cible (7, 9, 11, 13, 41, 43) et/ou les élévateurs transporteurs continus pour conteneurs source (19) sont disposés les uns par rapport aux autres en formant de préférence un angle, tel qu'un angle de 90°, avec leurs plans de transport.

4. Dispositif de préparation des commandes (1) selon l'une quelconque des revendications 2 à 3, dans lequel les élévateurs transporteurs continus pour conteneurs cible (7, 9, 11, 13, 41, 43) et/ou le/les élévateur(s) transporteur(s) continu(s) pour conteneurs source (19) sont réalisés sous forme de modules identiques les uns aux autres, de telle sorte qu'ils peuvent être juxtaposés les uns aux autres et/ou permutés les uns avec les autres de manière quelconque.

5. Dispositif de préparation des commandes (1) selon l'une quelconque des revendications 2 à 4, dans lequel les conteneurs cible (15) et les conteneurs source (21) sont construits de manière identique.

6. Dispositif de préparation des commandes (1) selon l'une quelconque des revendications 2 à 5, dans lequel les élévateurs transporteurs continus pour conteneurs cible (7, 9, 11, 13, 41, 43) et/ou le/les élévateur(s) transporteur(s) continu(s) pour conteneurs source (19) peuvent être attachés les uns aux autres et désolidarisés les uns des autres de manière à être guidé linéairement de préférence dans le sens de déplacement du brin d'acheminement et du brin d'évacuation des circuits de transport (16) pour conteneurs cible et/ou conteneurs source.

7. Dispositif de préparation des commandes (1) selon l'une quelconque des revendications précédentes, dans lequel le circuit de transport pour conteneurs cible (16) de l'élévateur transporteur continu pour conteneurs cible (7, 9, 11, 13, 41, 43) respectif et/ou le circuit de transport pour conteneurs source (16) de l'élévateur transporteur continu pour conteneurs source (19) respectif comportent deux voies de transport linéaires (23, 25) de préférence parallèles, agencées à distance verticale l'une de l'autre, ayant chacune un système d'entraînement pour le déplacement automatique des conteneurs cible (15) ou des conteneurs source (21), et avec un dispositif de levage aux extrémités de chacune des voies de transport linéaires, pour le transbordement automatique des conteneurs cible (15) ou des conteneurs source (21) de l'une des voies de transport linéaires sur l'autre voie de transport linéaire (23, 25), dans lequel le système d'entraînement de la voie de transport linéaire inférieure (25) est réalisé de préférence sous forme d'entraînement par force de gravité et le système d'entraînement de la voie de transport linéaire supérieure (23) est réalisé de préférence sous forme d'entraînement par moteur électrique.

8. Dispositif de préparation des commandes (1) selon l'une quelconque des revendications précédentes, dans lequel l'élévateur transporteur continu pour conteneurs cible (7, 9, 11, 13, 41, 43) respectif et/ou l'élévateur transporteur continu pour conteneurs source (19) respectif comportent plusieurs moyens de support, tels que des plateaux support, qui sont prévus de manière fixe dans le circuit de transport pour conteneurs cible (16) et/ou dans le circuit de transport pour conteneurs source (16) et tournent avec ceux-ci et qui sont destinés à recevoir les conteneurs cible (15) ou les conteneurs source (21).

9. Dispositif de préparation des commandes (1) selon l'une quelconque des revendications précédentes, dans lequel dans l'élévateur transporteur continu pour conteneurs cible (7, 9, 11, 13, 41, 43) respectif et/ou dans l'élévateur transporteur continu pour conteneurs source (19) respectif peuvent être transportés de manière circulaire une pluralité de conteneurs cible (15) et/ou de conteneurs source (21), de préférence au moins quatre, encore mieux au moins six.

10. Dispositif de préparation des commandes (1) selon l'une quelconque des revendications précédentes, dans lequel il est possible d'inverser le sens de fonctionnement continu de l'élévateur transporteur continu pour conteneurs cible (7, 9, 11, 13, 41, 43) respectif, de telle sorte que les conteneurs cible (15), situés dans le circuit de transport pour conteneurs cible (16) qui leur est associé, peuvent être transportés au choix dans l'un ou l'autre sens de rotation.

11. Procédé de préparation des commandes avec des articles issus de conteneurs source (21) et déposés dans des conteneurs cible (15) par une personne de service (5) située dans une zone de préparation des commandes (3), de préférence moyennant l'utilisation d'un dispositif de préparation des commandes (1) selon l'une quelconque des revendications précédentes, dans lequel un conteneur source (21) contenant des articles associés à ce conteneur source (21) est acheminé automatiquement vers la personne de service (5) au moyen de plusieurs élévateurs transporteurs continus pour conteneurs cible (7, 9, 11, 13, 41, 43), qui sont disposés au voisinage de la zone de préparation des commandes (3) et comportent chacun un circuit de transport pour conteneurs cible (16), dans lequel le plan de transport (17) du circuit de transport pour conteneurs cible (16) de l'élévateur transporteur continu pour conteneurs cible (7, 9, 11, 13, 41, 43) respectif est orienté verticalement et coupe la zone de préparation des commandes (3), plusieurs, de préférence une pluralité, telle qu'au moins quatre ou cinq ou encore mieux au moins six conteneurs cible (15) par circuit de transport pour conteneurs cible (16) étant acheminés de manière répétée en continu le long du circuit de transport pour conteneurs cible (16) respectif vers la personne de service (5) située dans la zone de préparation des commandes (3), jusqu'à ce que le conteneur cible (15) en circulation soit préparé avec le nombre souhaité d'articles issus du conteneur source (21) acheminé.

12. Procédé selon la revendication 11, dans lequel un autre conteneur source (21) contenant d'autres articles associés à celui-ci est ensuite acheminé vers la personne de service (5) en vue de préparer les articles correspondants dans le conteneur cible (15) respectif en circulation, et dans lequel les conteneurs cible (15) restent en circulation dans l'élévateur transporteur continu pour conteneurs cible jusqu'à ce qu'ils soient préparés avec le nombre souhaité d'articles souhaités, de préférence jusqu'à ce qu'ils soient préparés complètement pour être évacués ensuite par un dispositif de transport pour conteneurs cible (37) hors de l'élévateur transporteur continu pour conteneurs cible (7, 9, 11, 13, 41, 43).

13. Procédé selon la revendication 11 ou 12, dans lequel, lorsque le conteneur source (21) acheminé est vide avant que le conteneur cible (15) respectif soit préparé avec le nombre souhaité d'articles du conteneur source (21) vidé, un autre conteneur source (21) contenant des articles associés à ce conteneur source (21) et correspondant au conteneur source (21) vide, est acheminé vers la personne de service (5).

14. Procédé selon l'une quelconque des revendications 11 à 13, dans lequel au moyen d'au moins un élévateur transporteur continu pour conteneurs source (19), disposé au voisinage de la zone de préparation des commandes (3), plusieurs, de préférence une pluralité, telle qu'au moins quatre ou cinq ou encore mieux au moins six conteneurs source (21) sont acheminés de manière répétée en continu le long d'un circuit de transport pour conteneurs source (16) vers la personne de service (5), jusqu'à ce qu'un nombre prédéterminé d'articles, de préférence tous les articles, soient amenés hors du conteneur source (21) respectif et déposés dans les conteneurs cible (15), et dans lequel au moyen d'un dispositif de transport pour conteneurs source (39), les conteneurs source (21) sont acheminés vers ledit au moins un ou sont évacués hors dudit au moins un élévateur transporteur continu pour conteneurs source (19).

15. Procédé selon l'une quelconque des revendications 11 à 14, dans lequel les conteneurs cible (15) dans le circuit de transport pour conteneurs cible (16) respectif sont transportés au choix dans l'un ou dans l'autre sens de rotation.
